(19) Europäisches Patentamt
European Patent Office
Office européen des brevets

(11) **EP 2 945 987 B1**

(12) **EUROPÄISCHE PATENTSCHRIFT**

(45) Veröffentlichungstag und Bekanntmachung des Hinweises auf die Patenterteilung:
**09.05.2018   Patentblatt 2018/19**

(21) Anmeldenummer: **14700748.8**

(22) Anmeldetag: **17.01.2014**

(51) Int Cl.:
*C09D 5/00* (2006.01)   *C09D 5/08* (2006.01)

(86) Internationale Anmeldenummer:
**PCT/EP2014/050938**

(87) Internationale Veröffentlichungsnummer:
**WO 2014/111539 (24.07.2014 Gazette 2014/30)**

(54) **VERFAHREN ZUR HERSTELLUNG EINER KORROSIONSSCHUTZBESCHICHTUNG**

METHOD FOR PRODUCING AN ANTI-CORROSION COATING

PROCÉDÉ DE PRODUCTION D'UN REVÊTEMENT ANTI-CORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2013   US 201361753455 P
17.01.2013   EP 13151655**

(43) Veröffentlichungstag der Anmeldung:
**25.11.2015   Patentblatt 2015/48**

(73) Patentinhaber:
• **BASF Coatings GmbH
48165 Münster (DE)**
• **Université Blaise Pascal
63000 Clermont-Ferrand Cedex (FR)**

(72) Erfinder:
• **HINTZE-BRÜNING, Horst
48165 Münster (DE)**
• **LEROUX, Fabrice
F-63670 Le Cendre (FR)**
• **STIMPFLING, Thomas
F-63000 Clermont-Ferrand (FR)**
• **KEIL, Patrick
48308 Senden (DE)**
• **THEIL, Hubert
48153 Münster (DE)**

(74) Vertreter: **BASF IP Association
BASF SE
G-FLP-C006
67056 Ludwigshafen (DE)**

(56) Entgegenhaltungen:
EP-A1- 2 604 661      WO-A1-2013/083293
CN-A- 102 432 778    CN-A- 102 634 835

**Beschreibung**

Die vorliegende Erfindung betrifft ein Verfahren zur Herstellung einer Korrosionsschutzbeschichtung, bei dem ein Korrosionsschutzgrundierungsmittel enthaltend ein organisches Polymer als Bindemittel und ein synthetisches, organische Anionen enthaltendes schichtförmiges Doppelhydroxid direkt auf ein metallisches Substrat aufgebracht wird und anschließend aus dem aufgebrachten Korrosionsschutzgrundierungsmittel ein Polymerfilm gebildet wird. Weiterhin betrifft die vorliegende Erfindung ein beschichtetes metallisches Substrat, welches nach dem genannten Verfahren beschichtet wurde. Ebenfalls betrifft die vorliegende Erfindung die Verwendung des Korrosionsschutzgrundierungsmittels zur Verbesserung der Korrosionsbeständigkeit metallischer Substrate.

**Stand der Technik**

Die Korrosion metallischer Werkstoffe stellt ein heutzutage noch immer nicht zufriedenstellend gelöstes Problem dar. Durch die Korrosion, das heißt die in der Regel elektrochemische Reaktion eines metallischen Werkstoffs mit seiner atmosphärischen Umgebung, insbesondere Sauerstoff und Wasser, kommt es zu signifikanten Veränderungen des Werkstoffs. Korrosionsschäden führen zur Beeinträchtigung der Funktion metallischer Bauteile und letztlich zur Notwendigkeit von Reparatur oder Austausch der Bauteile. Die entsprechende wirtschaftliche Bedeutung der Korrosion beziehungsweise des Schutzes vor Korrosion ist demnach hochrelevant.

Dem Korrosionsschutz ist demnach in beinahe allen Bereichen der Metallindustrie (beispielsweise Maschinenbau und Ausrüstung, Automobilindustrie (Fahrzeugbau), Luft- und Raumfahrtindustrie, Schiffbauindustrie, Elektroindustrie, Feinmechanikindustrie), insbesondere aber in den Bereichen der Automobil- und der Luftfahrtindustrie, eine hohe Wichtigkeit beizumessen. Gerade in den letztgenannten Bereichen werden als Bauteile größtenteils metallische Substrate eingesetzt, die teils extremen atmosphärischen Bedingungen ausgesetzt sind.

Typischerweise werden metallische Substrate im Rahmen der Fahrzeuglackierung und Luftfahrtindustrie einem aufwendigen mehrschichtigen Beschichtungsverfahren unterworfen. Dies ist notwendig, um den hohen Anforderungen der Fahrzeugbauindustrie und Luftfahrtindustrie, beispielsweise einem guten Korrosionsschutz, gerecht werden zu können.

Gängigerweise erfolgt zunächst im Rahmen der Vorbehandlung des metallischen Substrats der Aufbau einer korrosionsschützenden Konversionbeschichtung. Zu nennen sind dabei beispielsweise die Phosphatierung von Stahlsubstraten oder eine Chromatierung von Aluminiumsubstraten bzw. Aluminiumlegierungen, beispielsweise speziellen Aluminiumkupferlegierungen wie der AA2024-T3 Legierung. Letztere findet aufgrund ihrer sehr guten Verarbeitbarkeit, seiner geringen Dichte und gleichzeitig widerstandsfähigen Beschaffenheit gegen physische Beanspruchung hauptsächlich Anwendung im Bereich der Luftfahrtindustrie. Gleichzeitig neigt das Material jedoch zu der gefährlichen Fadenkorrosion ("Filiform Corrosion"), bei der sich - oftmals nach physischer Beschädigung der Substratbeschichtung und gleichzeitig hoher Luftfeuchtigkeit - die Korrosion fadenförmig unter der Beschichtung des Substrats fortpflanzt und dabei fadenförmige Korrosionsschäden des metallischen Substrats hervorruft. Entsprechend wichtig ist ein guter Korrosionsschutz.

Nach der Vorbehandlung und dem Aufbau entsprechender Konversionsschichten erfolgt grundsätzlich die Herstellung einer korrosionsschützenden Grundierungsschicht. Diese basiert auf einer organisch-polymeren Matrix und kann zudem die weiter unten beschriebenen Korrosionsschutzpigmente enthalten. Im Rahmen der Automobilindustrie handelte es sich dabei in der Regel um eine Elektrotauchlackierung, insbesondere eine kathodische Elektrotauchlackierung (KTL). In der Flugzeugindustrie werden meist spezielle epoxidharzbasierende Grundierungen eingesetzt. Im Bereich der Automobillackierung folgt dann in der Regel die Herstellung einer Füllerlackierung, die beispielsweise noch vorhandene Unebenheiten des Substrats ausgleichen und die KTL gegenüber Steinschlagschäden schützen soll. Im letzen Schritt folgt schließlich die Decklackierung, die insbesondere bei der Automobillackierung aus zwei separat aufgebrachten Schichten, einer Basislack- und einer Klarlackschicht, besteht.

Eine effektive und auch heutzutage nach wie vor wichtige Form des Korrosionsschutzes metallischer Substrate ist der Einsatz von Chromaten. Beispielsweise werden Chromate beim Aufbau von Konversionsschichten im Rahmen der Oberflächenvorbehandlung von metallischen Substraten eingesetzt (Chromatierung). Ebenfalls häufig werden Chromate als so genannte Korrosionsschutzpigmente direkt in Korrosionsschutzgrundierungsmitteln, die auf organisch-polymeren Harzen basieren, eingesetzt. Bei diesen Grundierungsmitteln handelt es sich also um Beschichtungsstoffe beziehungsweise Lacke, die neben bekannten Lackkomponenten wie organischen Harzen als Bindemittel zusätzlich bestimmte Chromate in Form von Chromatsalzen (z. B. Barium-, Zink-, Strontiumchromat) enthalten.

Die korrosionsschützende Wirkung von Chromaten, beispielsweise im Rahmen des Aufbaus von Konversionsschichten durch das Ätzen der metallischen Oberfläche (beispielsweise Aluminium) und die dann folgende anteilige Reduktion des Chromats zum 3-wertigen Chrom sowie den Aufbau schwerlöslicher, gemischter Aluminium(III)/Chrom(III)/Chrom(VI)-Oxidhydrate als Passivierungsschichten, ist seit langem bekannt.

Problematisch sind jedoch die hoch toxische und cancerogene Wirkung der Chromate und die damit einhergehende Belastung von Mensch und Umwelt. Die Vermeidung von Chromaten in der Fahrzeugindustrie bei gleichzeitiger Beibehaltung eines angemessenen Korrosionsschutzes liegt daher seit Langem im Bestreben der entsprechenden Industriezweige.

Ein möglicher Ansatz zur Vermeidung von Chromaten bei gleichzeitigem Erhalt eines angemessenen Korrosionsschutzes ist beispielsweise der Einsatz von Oxoanionen (beziehungsweise deren Salze) verschiedener Übergangsmetalle wie beispielsweise $MoO_4^{2-}$, $MnO_4^-$ und $VO_3^-$. Auch der Einsatz von Lanthanoid-Kationen oder unterschiedlichen organischen Spezies wie beispielsweise Benzotriazolen, Ethylendiamintetraessigsäure (EDTA), Quinolin-Derivaten oder Phosphatderivaten ist bekannt. Die zugrunde liegenden Wirkungsmechanismen sind komplex und auch heute noch nicht vollständig verstanden. Sie reichen von der Bildung passivierender Oxid-/Hydroxidschichten auf der korrodierenden Metalloberfläche bis hin zur Komplexierung bestimmter Metallkationen (beispielsweise Cu(II)) und der damit einhergehender Unterdrückung spezieller Korrosionsarten (beispielsweise der Fadenkorrosion von Aluminiumkupferlegierungen).

Ein weiterer Ansatz besteht in der Verwendung so genannter Nanocontainer- und/oder Schichtstruktur-Materialien wie beispielsweise organischen Cyclodextrinen oder anorganischen Materialien wie Zeolithen, Tonerden-Nanoröhren und Smektiten. Verwendet werden auch Hydrotalkit-Komponenten beziehungsweise schichtförmige Doppelhydroxid-Materialien. Letztere werden in der allgemeinen Fachliteratur meist mit dem feststehenden englischen Begriff "layered double hydroxide" beziehungsweise der entsprechenden Abkürzung "LDH" bezeichnet. Sie werden in der Literatur häufig durch die idealisierte allgemeine Formel $[M2^{2+}_{(1-x)} M3^{3+}_x(OH)_2]^{x+}$ $[A^{y-}_{(x/y)} \cdot nH_2O]$ oder ähnliche Summenformeln beschrieben. Darin steht M2 für zweiwertige metallische Kationen, M3 für dreiwertige metallische Kationen und A für Anionen der Valenz x. Bei den natürlich vorkommenden LDH handelt es sich hierbei in der Regel um anorganische Anionen wie Karbonat, Chlorid, Nitrat, Hydroxid, und/oder Bromid. Auch verschiedene weitere anorganische sowie organische Anionen können insbesondere in synthetischen, weiter unten beschriebenen LDH vorhanden sein. Zudem wird in obiger allgemeiner Formel das vorhandene Kristallwasser berücksichtigt. Bei den Hydrotalkiten ist als zweiwertiges Kation $Mg^{2+}$, als dreiwertiges Kation $Al^{3+}$ und als Anion Karbonat vorhanden, wobei letzteres durch Hydroxidionen oder andere anorganische und auch organische Anionen zumindest anteilig substituiert sein kann. Dies gilt insbesondere für die synthetischen Hydrotalkite. Die Hydrotalkite können also als spezielle Form der allgemein als LDH bekannten Schichtstrukturen bezeichnet werden. Die Hydrotalkite beziehungsweise LDH haben eine schichtartige Struktur ähnlich dem Brucit ($Mg(OH)_2$), wobei jeweils zwischen zwei, aufgrund der anteilig vorhandenen dreiwertigen Metallkationen positiv geladenen Metallhydroxidschichten eine negativ geladene Schicht von interkalierten Anionen liegt, welche in der Regel zusätzlich Kristallwasser enthält. Es handelt sich also um alternierend positiv und negativ geladene Schichten, die durch entsprechende ionische Wechselwirkungen eine Schichtstruktur ausbilden. Die LDH-Schichtstruktur findet in der oben gezeigten Formel durch die entsprechend gesetzten Klammern Berücksichtigung.

Zwischen zwei benachbarte Metallhydroxidschichten können unterschiedliche Agenzien, beispielsweise die oben genannten Korrosionsschutzagenzien, durch nicht-kovalente, ionische und/oder polare Wechselwirkungen eingelagert werden. So werden bei den Hydrotalkiten beziehungsweise LDH Korrosionsschutzagenzien in anionischer Form in die anionischen Schichten eingelagert. Sie werden direkt in entsprechende Beschichtungsmittel auf Basis polymerer Bindemittel (beispielsweise Grundierungsmittel) eingearbeitet und tragen somit zum Korrosionsschutz bei. Dabei unterstützen sie die korrosionsschützenden Konversionschichten. Versucht wird auch, die Konversionsschichten ganz zu ersetzen, wobei dann die entsprechenden Grundierungen direkt auf das Metall aufgetragen werden. Auf diese Weise wird das Beschichtungsverfahren weniger aufwendig und damit kostengünstiger gestaltet.

Die WO 03/102085 beschreibt synthetische Hydrotalkit-Komponenten beziehungsweise schichtförmige Doppelhydroxide (LDH) enthaltend austauschbare Anionen und deren Einsatz in Beschichtungsmitteln zur Verbesserung des Korrosionsschutzes von Aluminiumoberflächen. Die schichtförmigen Doppelhydroxide werden dabei durch die bereits weiter oben angegebene, idealisierte allgemeine Formel $[M2^{2+}_{(1-x)} M3^{3+}_x(OH)_2]^{x+}$ $[A^{x-} \cdot nH_2O]$ beschrieben. Als Metallkationen sind die Hydrotalkit-Kationen Magnesium(II) und Aluminium(III) bevorzugt. Als Anionen werden beispielsweise Nitrat, Karbonat oder Molybdat aber auch die chromhaltigen Anionen Chromat und Dichromat beschrieben, wobei das toxische, cancerogene Chromat den besten Korrosionsschutz aufweist.

Weitere Hydrotalkit-Komponenten beziehungsweise LDH und deren Einsatz als Korrosionsschutzmittel in Beschichtungsmitteln auf Basis organischer polymerer Bindemittel werden beispielsweise in EP 0282619 A1, WO 2005/003408 A2 oder ECS Transactions, 24 (1) 67-76 (2010) beschrieben. Dabei kommen neben den schon beschriebenen anorganischen Anionen beispielsweise auch organische Anionen wie Salicylat, Oxalat, DMTD (2,4-dimercapto-1,3,4-thiadiazol) und dessen Derivate, aus EDTA erhältliche Anionen oder Benzotriazolat zum Einsatz.

Trotz der oben beschriebenen Ansätze konnte das Problem der Korrosion bis heute nicht zufrieden stellend gelöst werden. Dies hat zur Folge, dass bis heute nach wie vor chromhaltige Verbindungen in großem Umfang als Korrosionsschutzmittel eingesetzt werden müssen, um einen angemessenen Korrosionsschutz zu garantieren.

In den wissenschaftlichen Publikationen Applied Clay Science (2012), 55, 88-93, Journal of Solid State Chemistry (2012), 185, 150-155 und Journal of Material Science (2008), 42(2), 434-439 werden LDH beschrieben, die als Anionen verschiedene Aminosäuren enthalten. Als potentielle Anwendungsgebiete werden die Abwasseraufbereitung oder Analysemethoden in der Biomedizin angegeben. Der korrosionsschützende Einsatz von LDH enthaltend Aminosäuren in Beschichtungsmitteln für Metalle wird nicht beschrieben.

Die EP 2604661 A1 betrifft korrosionsinhibierende Pigmente und ein Verfahren zu deren Herstellung. Die korrosionsinhibierenden Pigmente enthalten verkapselte Korrosionsinhibitoren die durch bestimmte Stimuli freigesetzt werden können.

Die WO 2013/083293 A1 betrifft ein Verfahren zur Herstellung eines beschichteten Stahlsubstrat zur Verwendung in Bau- oder Automobilanwendungen, welches die folgenden Schritte umfasst: (i) Bereitstellen des Stahlsubstrats; (ii) Herstellen einer ersten Beschichtungsmischung enthaltend Nanobehälter, beispielsweise schichtartige Doppelhydroxide, die nanoskalige Korrosionsinhibitoren enthalten; (iii) Herstellung einer zweiten Beschichtungsmischung, die eine härtbare organische Komponente umfasst; (iv) Kombinieren der ersten Beschichtungsmischung und der zweiten Beschichtungsmischung; (v) Auftragen der kombinierten Mischung auf das Stahlsubstrat; (vi) Härten der kombinierten Mischung, um eine organische Polymerbeschichtung als Barriere und für aktiven Korrosionsschutz zu erzeugen.

Die CN 102634835 A beschreibt die in-situ-Bildung eines Doppelhydroxid-Verbundmaterials auf einem Aluminiumsubstrat und die nachfolgende Modifizierung des anorganischen Films mit einem anionischen aminosäurebasierten Surfactant.

Die CN 102432778 A betrifft ein Herstellungsverfahren einer selbsttragenden molekular geprägte Polymerfolie. Das Herstellungsverfahren umfasst die Schritte: Umsetzung zweiwertiger Metallionen mit einem porösen Aluminiumoxidfilm, um ein poröses aluminiumoxidbasiertes schichtförmiges Doppel-Hydroxid zu erhalten; die weitere Umsetzung um ein SBC (Sulpho-Benzoyl Cyanessigsäure) interkaliertes poröses aluminiumoxidbasiertes schichtförmiges Doppel-Hydroxid zu erhalten; und schließlich das Mischen des SBC-interkalierten porösen aluminiumoxidbasierten schichtförmigen Doppel-Hydroxids mit einem polymerisierbaren Monomer, einem polymerisierten Vernetzungsmittel, einem molekular geprägten Template-Mittel und einem organischen Lösungsmittel, Dispergieren mittels Ultraschallwellen, Hinzufügen eines Polymerisationsinitiators zur Polymerisation, Waschen des Reaktionsproduks und Trocknen, um die selbsttragende molekular geprägte Polymerfolie zu erhalten.

## Aufgabe der vorliegenden Erfindung

Trotz der zahlreichen Ansätze zur Herstellung von Beschichtungen metallischer Substrate mit angemessener Korrosionsschutzwirkung bei gleichzeitiger Vermeidung von chromhaltigen Korrosionsschutzmitteln, wird die zugrunde liegende Problematik bis heute nicht zufrieden stellend gelöst. Dies hat zur Folge, dass den chromhaltigen Korrosionsschutzmitteln nach wie vor eine entscheidende Rolle für den Aufbau korrosionsschützender Beschichtungen metallischer Substrate zukommt. Als erst recht schwierig gestaltet sich ein angemessener Korrosionsschutz dann, wenn beispielsweise versucht wird, auf entsprechende Konversionsschichten zu verzichten und die entsprechende Grundierung direkt auf das metallische Substrat aufzubringen, um dadurch den Beschichtungsprozess kostengünstiger und zeitsparender zu gestalten.

Aufgabe der vorliegenden Erfindung war es demzufolge, einen guten Korrosionsschutz metallischer Substrate zu gewährleisten und dabei auf chromhaltige Korrosionsschutzmittel verzichten zu können. Weiterhin sollte der zugrunde liegende Beschichtungsprozess möglichst einfach sein. So sollte die resultierende Beschichtung auf einer möglichst geringen Anzahl verschiedener Einzelschichten beruhen. Es sollte zudem möglich sein, auf entsprechende Konversionsschichten verzichten zu können und trotzdem einen ausgezeichneten Korrosionsschutz zu erhalten. Auf diese Weise sollte es insbesondere möglich sein, in den hinsichtlich des Korrosionsschutzes anspruchsvollen Gebieten der Automobilindustrie (Fahrzeugbau) und der Luftfahrtindustrie die Vorteile eine guten Korrosionsschutzes mit einem ökonomisch vorteilhaften Beschichtungsprozess zu kombinieren.

## Erfindungsgemäße Lösung

Erfindungsgemäß konnten die Aufgaben gelöst werden durch ein Verfahren zur Herstellung einer Korrosionsschutzbeschichtung, bei dem

(1) ein Korrosionsschutzgrundierungsmittel enthaltend

(A) mindestens ein organisches Polymer, wobei es sich um ein Polyadditions-, Polykondensations- und/oder Polymerisationsharz handelt, als Bindemittel und
(B) mindestens ein synthetisches, organische Anionen enthaltendes schichtförmiges Doppelhydroxid

direkt auf ein metallisches Substrat aufgebracht wird und
(2) aus dem in Stufe (1) aufgebrachten Korrosionsschutzgrundierungsmittel ein Polymerfilm gebildet wird,

wobei das Verfahren dadurch gekennzeichnet ist, dass

das mindestens eine synthetische schichtförmige Doppelhydroxid (B) mindestens ein organisches Anion einer alpha-Aminosäure umfasst.

Ist im Folgenden allgemein von dem oder den "organischen Polymeren (A)" die Rede, so handelt es sich hierbei um die vorgenannten Polyadditions-, Polykondensations- und/oder Polymerisationsharze.

Gegenstand der vorliegenden Erfindung ist zudem ein beschichtetes metallisches Substrat, welches nach dem genannten Verfahren beschichtet wurde.

Ebenfalls betrifft die vorliegende Erfindung die Verwendung des Korrosionsschutzgrundierungsmittels und damit der darin enthaltenen synthetischen, organische Anionen enthaltenden LDH zur Verbesserung der Korrosionsbeständigkeit metallischer Substrate.

Durch das erfindungsgemäße Verfahren wird ein ausgezeichneter Korrosionsschutz metallischer Substrate gewährleistet, wobei zudem auf chromhaltige Korrosionsschutzmittel verzichtet werden kann. Gleichzeitig ist es möglich, auf Konversionsschichten zu verzichten und trotzdem einen ausgezeichneten Korrosionsschutz zu erhalten. Die Vorteile eines guten Korrosionsschutzes werden also mit einem ökonomisch vorteilhaften Beschichtungsprozess kombiniert. Das Verfahren ist damit in den hinsichtlich des Korrosionsschutzes anspruchsvollen Gebieten der Automobilindustrie (Fahrzeugbau) und der Luftfahrtindustrie anwendbar.

**Ausführliche Beschreibung der Erfindung**

Das in dem erfindungsgemäßen Verfahren einzusetzende Korrosionsschutzgrundierungsmittel enthält mindestens ein wie weiter unten beschriebenes organisches Polymer (A) als Bindemittel. Bekanntermaßen werden als Bindemittel organische Verbindungen in Beschichtungsstoffen bezeichnet, die für die Filmbildung verantwortlich sind. Sie stellen den nichtflüchtigen Anteil des Beschichtungsstoffes ohne Pigmente und Füllstoffe dar. Aus dem Korrosionsschutzgrundierungsmittel wird also nach der Applikation auf ein Substrat ein Polymerfilm gebildet, sodass die gebildete Beschichtungsschicht auf einer organischen Polymermatrix basiert.

Das in dem erfindungsgemäßen Verfahren einzusetzende Korrosionsschutzgrundierungsmittel ist beispielsweise physikalisch, thermisch oder aktinisch härtbar. Zu diesem Zweck enthält es dann mindestens ein wie weiter unten beschriebenes organisches Polymer (A) als Bindemittel welches beispielsweise physikalisch, thermisch oder mit aktinischer Strahlung härtbar ist. Bevorzugt ist das Korrosionsschutzgrundierungsmittel physikalisch oder thermisch härtbar. Das Korrosionsschutzgrundierungsmittel kann, beispielsweise sofern es thermisch härtbar ist, selbst- und/oder fremdvernetzend sein. Bevorzugt ist es fremdvernetzend. Das einzusetzende Korrosionsschutzgrundierungsmittel kann auch thermisch und aktinisch härtbar sein. Dies bedeutet beispielsweise, dass das organische Polymer (A) sowohl thermisch als auch aktinisch härtbar ist. Möglich ist dann natürlich auch die gleichzeitige oder aufeinander folgende Anwendung beider Härtungsmethoden, das heißt die dual-cure-Härtung.

Im Rahmen der vorliegenden Erfindung bedeutet "physikalisch härtbar" beziehungsweise der Begriff "physikalische Härtung" die Bildung eines Films durch Abgabe von Lösemittel aus Polymerlösungen oder Polymerdispersionen.

Im Rahmen der vorliegenden Erfindung bedeutet "thermisch härtbar" beziehungsweise der Begriff "thermische Härtung" die durch chemische Reaktion von reaktiven funktionellen Gruppen initiierte Vernetzung einer Lackschicht (Bildung eines Beschichtungsfilms), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Filmbildung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeilen 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in den als Bindemittel eingesetzten organischen Polymeren (A) vorhanden, liegt eine Selbstvernetzung vor. Eine Fremdvernetzung liegt beispielsweise vor, wenn ein organisches Polymer (A) enthaltend bestimmte funktionelle Gruppen mit einem wie weiter unten beschriebenen Vernetzungsmittel reagiert, wobei dann das Vernetzungsmittel reaktive funktionelle Gruppen enthält, die zu den in dem eingesetzten organischen Polymer (A) vorhandenen reaktiven funktionellen Gruppen komplementär sind.

Es ist auch möglich, dass ein organisches Polymer (A) als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch härtbar" beziehungsweise dem Begriff "aktinische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Auch epoxidgruppenhaltige Systeme können aktinisch gehärtet werden, wobei dann die Härtung in der Regel durch kationische Photoinitiatoren initiiert wird und die so aktivierten Epoxidgruppen mit den lypischen, auch weiter unten beschriebenen Vernetzungsmittel für epoxidgruppenhaltige Systeme umgesetzt werden können. Der aktinischen Härtung liegt also ebenfalls eine chemische Vernetzung zugrunde, wobei die energetische Aktivierung dieser chemischen Reaktion durch aktinische Strahlung bewirkt wird.

Der erste Bestandteil des Korrosionsschutzgrundierungsmittels, das im Rahmen des erfindungsgemäßen Verfahrens einzusetzen ist, ist mindestens ein organisches Polymer (A) als Bindemittel. Bekanntermaßen handelt es sich bei organischen Polymeren um Mischungen von verschieden großen Molekülen, wobei sich diese Moleküle durch eine Abfolge von gleichen oder verschiedenen organischen Monomereinheiten (als reagierte Form von organischen Monomeren) auszeichnen. Während einem bestimmten organischen Monomer eine diskrete Molekülmasse zuzuordnen ist, ist ein Polymer also immer eine Mischung von Molekülen, die sich in ihrer Molekülmasse unterscheiden. Ein Polymer kann daher nicht durch eine diskrete Molekülmasse beschrieben werden, sondern ihm werden bekanntermaßen immer mittlere Molekülmassen, nämlich eine zahlenmittlere ($M_n$) und eine gewichtsmittlere ($M_w$) Molekülmasse, zugeordnet. Bekanntermaßen müssen die beschriebenen Eigenschaften definitionsgemäß immer zu der Beziehung $M_w$ größer $M_n$ führen beziehungsweise die Polydispersität ($M_w/M_n$) ist immer größer 1. Es handelt sich um die an sich bekannten Polyadditions-, Polykondensations- und/oder Polymerisationsharze. Beispielhaft seien Polyvinylacetal-, Acryl-, Epoxid-, Polyurethan-, Polyester, Polyamid- und Polyetherharze genannt. Die Polymere können beispielsweise die oben genannten funktionellen Gruppen zur komplementären und/oder autoreaktiven Vernetzung enthalten.

Der Anteil des mindestens einen organischen Polymers (A) als Bindemittel an dem Korrosionsschutzgrundierungsmittel beträgt vorzugsweise 20 bis 90 Gew.-%, besonders bevorzugt 30 bis 70 Gew.-% und insbesondere bevorzugt 40 bis 60 Gew.-%, jeweils bezogen auf den Festkörper des Korrosionsschutzgrundierungsmittels.

Zur Bestimmung des Festkörpers wird im Rahmen der vorliegenden Erfindung eine Menge von 1 g des jeweiligen Bestandteils, beispielsweise einer Dispersion eines Polymers in entsprechenden Lösemitteln oder des gesamten Korrosionsschutzgrundierungsmittels, für 1 h bei 125°C erhitzt, auf Raumtemperatur abgekühlt und dann zurückgewogen.

Im Falle eines thermisch härtbaren, fremdvernetzenden Korrosionsschutzgrundierungsmittels wird neben den oben beschriebenen Polymeren (A) als Bindemittel in der Regel zusätzlich mindestens ein Vernetzungsmittel eingesetzt. Bei den Vernetzungsmitteln handelt sich beispielsweise um die dem Fachmann bekannten, weiter unten beschriebenen Polyamine oder auch blockierte und/oder freie Polyisocyanate wie beispielsweise Hexamethylendiisocyanat, Isophorondiisocyanat, deren Isocyanurat-Trimerisate, sowie teilweise oder vollständig alkylierte Melaminharze.

Die Auswahl und Kombination von geeigneten organischen Polymeren (A) als Bindemittel und gegebenenfalls Vernetzungsmitteln erfolgt je nach den gewünschten und/oder erforderlichen Eigenschaften des herzustellenden Beschichtungssystems. Ein weiteres Auswahlkriterium sind die gewünschten und/oder erforderlichen Härtungsbedingungen, insbesondere die Härtungstemperaturen. Wie eine solche Auswahl zu treffen ist, ist dem Fachmann auf dem Gebiet bekannt und kann von diesem entsprechend angepasst werden. Es ist allerdings von Vorteil, wenn als organische Polymere (A) keine anionisch stabilisierten Polymere eingesetzt werden. Anionisch stabilisierte Polymere sind bekanntermaßen solche Polymere, die mit anionischen Gruppen und/oder funktionellen Gruppen, die durch Neutralisationsmittel in Anionen überführt werden können, modifiziert sind (beispielsweise Carboxylatgruppen und/oder Carbonsäuregruppen) und dadurch in Wasser dispergiert werden können. Solche Polymere können dann in wässrigen Zusammensetzungen, beispielsweise wässrigen Beschichtungszusammensetzungen, eingesetzt werden. Es hat sich im Rahmen der vorliegenden Erfindung gezeigt, dass der Einsatz solcher anionisch stabilisierten Polymere (A) nachteilig sein kann, da hierdurch gegebenenfalls ein anteiliger Austausch von in den weiter unten beschriebenen LDH befindlichen organischen Anionen gegen die Polymermoleküle stattfinden kann. Bevorzugt ist das erfindungsgemäße Korrosionsschutzgrundierungsmittel also frei von anionisch stabilisierten Polymeren.

Möglich sind dabei die an sich bekannten Einkomponenten-(1K)- und Mehrkomponentensysteme, insbesondere Zweikomponenten-(2K)-systeme.

In Einkomponenten(1K)-Systemen liegen die zu vernetzenden Komponenten, beispielsweise die organischen Polymere (A) als Bindemittel und die Vernetzungsmittel, nebeneinander, das heißt in einer Komponente, vor. Voraussetzung hierfür ist, dass die zu vernetzenden Komponenten erst bei höheren Temperaturen und/oder bei Bestrahlen mit aktinischer Strahlung miteinander vernetzen.

In Zweikomponenten(2K)-Systemen liegen die zu vernetzenden Komponenten, beispielsweise die organischen Polymere (A) als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Raumtemperatur miteinander reagieren. Bevorzugt sind (2K)-Systeme.

Bevorzugt enthält das Korrosionsschutzgrundierungsmittel mindestens ein Polyvinylbutyralharz und/oder Epoxidharz als organisches Polymer (A), ganz besonders bevorzugt ist mindestens ein Epoxidharz.

Als Polyvinylbutyrale beziehungsweise Polyvinylbutyralharz werden bekanntermaßen Polymere bezeichnet, die aus Polyvinylalkoholen durch Acetalisierung mit Butanal hergestellt werden. Sie gehören demnach zur Gruppe der Polyvinylacetale. Die zur Herstellung der Polyvinylbutyrale benötigten Polyvinylalkohole werden durch radikalische Polymerisation von Vinylacetat zum Polyvinylacetat und anschließende alkalische Verseifung hergestellt. Die dann eigentliche Herstellung der Polyvinylbutyrale erfolgt in der Regel durch die Umsetzung der Polyvinylalkohole mit Butanal in Gegenwart saurer Katalysatoren. Dabei ist aus statistischen beziehungsweise sterischen Gründen maximal eine Funktionalisierung von etwa 80% erreichbar. Da wie oben beschrieben die zur Herstellung der Polyvinylbutyrale einzusetzenden Polyvinylalkohole grundsätzlich durch Verseifung von Polyvinylacetat hergestellt werden und auch hierbei kein ein vollständiger Umsatz zu erwarten ist, enthalten die Polyvinylbutyrale in der Regel zumindest einen geringen Anteil an Acetylgruppen (mindestens ca. 2%). Die Polyvinylbutyrale werden bevorzugt als Lösungen beziehungsweise Dispersionen in organischen Lösemitteln wie beispielsweise Alkoholen, Ethern, Estern, Ketonen oder Chlorkohlenwasserstoffen beziehungsweise Gemischen hiervon in dem erfindungsgemäßen Korrosionsschutzgrundierungsmittel eingesetzt.

Die Harze können beispielsweise in physikalisch härtenden Korrosionsschutzgrundierungsmitteln als Alleinbindemittel verwendet oder in Kombination mit beispielsweise Phenol- oder Aminoharzen eingesetzt werden. Kenngrößen der Polyvinylbutyrale sind beispielsweise der Anteil an Acetalgruppen (beziehungsweise der Restanteil freier, nicht umgesetzter Hydroxylgruppen) oder der Anteil an (nicht verseiften) Acetylgruppen im Polymer.

Im Rahmen der vorliegenden Erfindung können letztlich alle der dem Fachmann an sich bekannten Polyvinylbutyrale eingesetzt werden. Bevorzugt werden allerdings Polyvinylbutyrale mit einem Acetalisierungsgrad zwischen 20 und 60 %, besonders bevorzugt, mit einem Acetalisierungsgrad zwischen 30 und 45 % eingesetzt (gemessen beispielsweise nach GOST-Norm: GOST 9439 RU). Solche Polyvinylbutyrale können beispielsweise unter der Handelsbezeichnung Mowital von der Firma Kurary, unter der Handelsbezeichnung Pioloform von der Firma Wacker oder unter der Handelsbezeichnung Butvar der Firma Butvar erhalten werden.

Bei den ebenfalls bevorzugten Epoxidharzen als organische Polymere (A) im erfindungsgemäßen Korrosionsschutzgrundierungsmittel handelt es sich um die an sich bekannten Polykondensationsharze, die im Grundmolekül mehr als eine EpoxidGruppe enthalten. Bevorzugt handelt es sich dabei um durch Kondensation von Bisphenol A oder Bisphenol F mit Epichlorhydrin hergestellte Epoxidharze. Diese Verbindungen enthalten entlang der Kette Hydroxygruppen und an den Enden Epoxidgruppen. Je nach Kettenlänge der Epoxidharze ändert sich die Fähigkeit zur Vernetzung über die Epoxid-Gruppen beziehungsweise über die Hydroxygruppen. Während mit steigender Kettenlänge beziehungsweise Molmasse die Fähigkeit zur Vernetzung über die Epoxid-Gruppen sinkt, steigt die Vernetzungsfähigkeit über die Hydroxygruppen mit wachsender Kettenlänge. Im Rahmen der vorliegenden Erfindung können letztlich alle der dem Fachmann an sich bekannten Epoxidharze eingesetzt werden, beispielsweise die weiter unten genannten und im Handel erhältlichen Epoxidharze, die als Lösung beziehungsweise Dispersion in organischen Lösemitteln oder Wasser erhalten werden können. Allerdings ist es aus den bereits oben genannten Gründen von Vorteil, keine anionisch stabilisierten Epoxidharze zu verwenden.

Die im Rahmen der vorliegenden Erfindung bevorzugt einzusetzenden Epoxidharze weisen bevorzugt einen Epoxidgruppengehalt von 800 bis 7000 mmol Epoxidgruppen pro kg Harz (mmol/kg), insbesondere bevorzugt von 3500 bis 6000 mmol/kg auf. Der Gehalt an Epoxidgruppen pro kg Harz wird dabei im Rahmen der vorliegenden Erfindung gemäß DIN EN ISO 3001 bestimmt.

Solche Epoxidharze können, beispielsweise als Lösung beziehungsweise Dispersion in organischen Lösemitteln oder Wasser, beispielsweise unter der Handelsbezeichnung Beckopox von der Firma Cytec oder unter der Handelsbezeichnung Epikote von der Firma Momentive erhalten werden.

Da die Epoxidharze in der Regel allein keine filmbildenden Eigenschaften aufweisen, werden im Falle ihres Einsatzes zusätzlich entsprechende Epoxidharz-Vernetzungsmittel eingesetzt. Insbesondere bevorzugt werden im Rahmen der vorliegenden Erfindung die bereits oben genannten Polyamine als Vernetzungsmittel beziehungsweise Epoxidharz-Vernetzungsmittel eingesetzt. "Polyamine" ist bekanntlich eine Sammelbezeichnung für organische Verbindungen mit 2 oder mehr Aminogruppen, beispielsweise Diamine oder Triamine. Neben den Aminogruppen weisen die Verbindungen dann beispielsweise ein aliphatisches oder aromatisches Grundgerüst auf, das heißt sie bestehen beispielsweise aus Aminogruppen und aliphatischen Gruppen beziehungsweise aus Aminogruppen und aromatischen Gruppen (aliphatische oder aromatische Polyamine). Natürlich können die Polyamine auch aliphatische und aromatische Einheiten sowie gegebenenfalls weitere funktionelle Gruppen enthalten Beispiele für aliphatische Polyamine sind Diethylentriamin, Triethylentetramin, 3,3',5-Trimethylhexamethylendiamin, 1,2-Cyclohexyldiamin und Isophorondiamin. Beispiele für aromatische Amine sind Methylendianilin und 4,4-Diaminodiphenylsulfon. Ebenfalls unter den Oberbegriff "Polyamine" fallen organische Verbindungen, die beispielsweise aus einem wie oben beschriebenen aliphatischen oder aromatischen Polyamin (als so genanntes Basispolyamin) durch Umsetzung zumindest eines Teils seiner Aminogruppen mit weiteren organischen Verbindungen hergestellt werden, um dadurch verschiedene Eigenschaften wie die Reaktivität und/oder die Löslichkeit der Verbindungen zu beeinflussen und/oder auch Einfluss auf die Eigenschaften der aus der entsprechenden Beschichtungszusammensetzung hergestellten Beschichtung (beispielsweise Oberflächenhärte) zu nehmen. Solche Verbindungen stellen also Addukte dar und können, sofern sie nach wie vor mindestens 2 Aminogruppen enthalten, als Polyaminaddukte oder modifizierte Polyamine bezeichnet werden. Sie weisen naturgemäß auch ein höheres Molekulargewicht als die oben genannten Polyamine auf, sodass ihre gesundheitsschädigende Wirkung herabgesetzt ist. Häufig stellen solche Polyaminaddukte Umsetzungsprodukte von aliphatischen und/oder aromatischen Polyaminen mit Polyepoxiden, beispielsweise den oben beschriebenen Epoxidharzen oder auch diskreten difunktionellen Verbindungen wie Bisphenol-A-diglycidether, dar, wobei dann ein stöchiometrischer Überschuss an Aminogruppen im Vergleich zu den Epoxidgruppen eingesetzt wird. Diese Addukte werden dann zur Härtung der Epoxidharze in der eigentlichen Beschichtungszusammensetzung eingesetzt. Ein bekanntes Beispiel ist das Umsetzungsprodukt von 3,3',5-Trimethylhexamethylendiamin als Basispolyamin mit Bisphenol-A-diglycidether als Epoxidharz. Ebenfalls unter den Oberbegriff der "Polyamine" fallen beispielsweise die an sich bekannten Polyaminoamide, das heißt Polymere, die beispielsweise durch Kondensation von wie oben beschriebenen Polyaminen als Basispolyamin und Polycarbonsäuren, insbesondere Diacarbonsäuren, hergestellt werden.

Die im Rahmen der vorliegenden Erfindung bevorzugt einzusetzenden Polyamine als Vernetzungsmittel weisen eine H-aktiv-Äquivalentmasse (Masse Polyamin pro mol aktivem Wasserstoff (N-H-Gruppen), das heißt Wasserstoff an primären und sekundären Aminogruppen) von 15 bis 330 g Polyamin pro mol aktivem Wasserstoff, insbesondere bevorzugt von 35 bis 330 g/mol, ganz besonders bevorzugt von 150 bis 250 g/mol auf (gemessen über die Bestimmung primärer und sekundärer Amingruppen gemäß ASTM D2073).

Solche Polyamine beziehungsweise Polyaminaddukte oder auch Polyaminoamide als Reaktionspartner beziehungsweise Vernetzungsmittel von Epoxidharzen können beispielsweise unter der Handelsbezeichnung Beckopox von der Firma Cytec oder auch unter der Handelsbezeichnung Cardolite (beispielsweise Cardolite NC-562) von der Firma Cardolite erhalten werden.

Ganz besonders bevorzugt wird im Rahmen der vorliegenden Erfindung mindestens ein Epoxidharz als organisches Harz (A) in Kombination mit mindestens einem Polyamin als Vernetzungsmittel eingesetzt.

Dabei wird der Anteil der Polyamine an dem Korrosionsschutzgrundierungsmittel vorzugsweise so gewählt, dass das Verhältnis der komplementären reaktiven funktionellen Gruppen des mindestens einen Polyamins (das heißt also vernetzbarer N-H-Gruppen aus primären und sekundären Aminogruppen) zu den Epoxidgruppen des mindestens einen Epoxidharzes (A) zwischen 0,4 und 1,4, besonders bevorzugt zwischen 0,6 und 1,0, ganz besonders bevorzugt zwischen 0,7 und 0,9 liegt (Bestimmung Epoxidgruppengehalt und H-aktiv-Äquivalentmasse siehe oben).

Das erfindungsgemäße Korrosionsschutzgrundierungsmittel enthält zudem mindestens ein synthetisches, organische Anionen enthaltendes schichtförmiges Doppelhydroxid (B). Die LDH enthalten mindestens eine Art organischer Anionen einer alpha-Aminosäure.

Alpha-Aminosäuren sind organische Moleküle, die mindestens eine Aminogruppe und mindestens eine Carbonsäuregruppe enthalten. In den Molekülen ist mindestens eine der Aminogruppen zu mindestens einer der Carbonsäuregruppen in alpha-Stellung angeordnet. Dies bedeutet, dass zwischen der jeweils betrachteten Aminogruppe und der entsprechenden Carbonsäuregruppe lediglich ein verbrückendes Kohlenstoffatom angeordnet ist. Dieses verbrückende Kohlenstoffatom weist dann zwei an sich beliebige weitere Restgruppen $R^1$ und $R^2$ auf. Bei den gängigen alpha-Aminosäuren handelt es sich bei mindestens einer dieser beiden Restgruppen, insbesondere bei genau einer dieser Restgruppen, um Wasserstoff. Die zweite Restgruppe kann dann ein an sich beliebiger organischer Rest sein. Ein solcher organischer Rest besteht bekanntermaßen aus ein oder mehreren linearen, verzweigten und zyklischen aliphatischen Gruppen, heterozyklischen Gruppen sowie aromatischen Gruppen oder er enthält ein oder mehrere der vorgenannten Gruppen und weist zudem Heteroatome beziehungsweise weitere Heteroatome auf. Als Heteroatome beziehungsweise Heteroelemente werden bekanntermaßen alle in organischen Resten auftretenden Elemente außer Kohlenstoff und Wasserstoff bezeichnet, insbesondere Stickstoff, Sauerstoff und Schwefel. Heteroatome können beispielsweise in aromatischen und heterozyklischen Gruppen enthalten sein, können mehrere der vorgenannten linearen, verzweigten und zyklischen aliphatischen sowie aromatischen Gruppen verbrücken, können endständig sein und/oder aber als Bestandteil funktioneller Gruppen wie beispielsweise weiterer Aminogruppen, weiterer Hydroxylgruppen oder Thiolgruppen enthalten sein.

Im Rahmen der vorliegenden Erfindung bevorzugt eingesetzt werden alpha-Aminosäuren, in denen mindestens eine der beiden Restgruppen am verbrückenden Kohlenstoffatom Wasserstoff ist. Bevorzugt ist, dass genau eine der Restgruppen Wasserstoff ist, das heißt die entsprechende Aminosäure eine chirale Aminosäure ist. Besonders bevorzugt sind die chiralen proteinogenen Aminosäuren. Hierzu gehören die alpha-Aminosäuren Alanin, Arginin, Asparagin, Asparaginsäure, Cystein, Glutamin, Glutaminsäure, Histidin, Isoleucin Leucin, Lysin, Methionin, Phenylalanin, Prolin, Serin, Threonin, Tryptophan, Tyrosin, Valin, Selenocystein, Pyrrolysin und Selenomethionin. Ebenfalls der genannten besonders bevorzugten Gruppe zugehörig ist das Cystin, welches beispielsweise durch oxidative Dimerisierung von Cystein entsteht.

In einer ebenfalls bevorzugten Ausführungsform der vorliegenden Erfindung werden alpha-Aminosäuren eingesetzt, die zusätzlich zu den Heteroatomen in den beiden in alpha-Stellung angeordneten Gruppen, das heißt der Aminogruppe und der Carbonsäuregruppe, noch weitere Heteroatome und/oder ungesättigte zyklische Reste, wie insbesondere Phenyl-, Imidazyl- und/oder Indolylreste enthalten. Als Heteroatome bevorzugt sind Stickstoff, Sauerstoff und Schwefel, welche insbesondere als Bestandteil von weiteren Aminogruppen, weiteren Carbonsäuregruppen, Hydroxylgruppen, Thiolgruppen und/oder verbrückenden Disulfidgruppen vorliegen. Selbstverständlich kann ein Heteroatom, insbesondere Stickstoff, auch innerhalb eines der ungesättigten zyklischen Reste vorliegen.

Als ganz besonders bevorzugt haben sich im Rahmen der vorliegenden Erfindung die alpha-Aminosäuren herausgestellt, die ausgewählt sind aus der Gruppe bestehend aus Cystin und proteinogenen alpha-Aminosäuren, die zudem weitere Aminogruppen, weitere Carbonsäuregruppen, Hydroxylgruppen, Thiolgruppen, Disulfidbrücken und/oder ungesättigte zyklische Reste enthalten. Ganz besonders bevorzugt sind demnach Arginin, Asparagin, Asparaginsäure, Cystein, Cystin, Glutamin, Glutaminsäure, Histidin, Lysin, Methionin, Phenylalanin, Prolin, Serin, Threonin, Tryptophan, und Tyrosin. Hierrunter nochmals bevorzugt sind Cystein, Cystin, Phenylalanin.

Sofern die im Rahmen der vorliegenden Erfindung einzusetzenden Aminosäuren ein chirales Zentrum aufweisen, was bevorzugt ist, kann es sich sowohl um die L- als auch die D-Konfiguration handeln. Selbstverständlich können auch Mischungen beider Konfigurationen eingesetzt werden, beispielsweise racemische Gemische. Bevorzugt sind im Rahmen der vorliegenden Erfindung die alpha-Aminosäuren mit L-Konfiguration.

Aus obigem folgt, dass die organischen Anionen der alpha-Aminosäuren insbesondere durch Deprotonierung der mindestens einen Carbonsäuregruppe der jeweiligen alpha-Aminosäure erhältlich sind. Eine solche Deprotonierung erfolgt im Rahmen der vorliegenden Erfindung bevorzugt durch Erhöhung des pH-Werts einer wässrigen Lösung oder Suspension der jeweiligen alpha-Aminosäure. Insbesondere wird die Deprotonierung im Rahmen der weiter unten angeführten Herstellung der LDH (B) durchgeführt. Die alpha-Aminosäuren enthalten zudem mindestens eine Aminogruppe. Diese Aminogruppen können bekanntermaßen basisch, das heißt als Protonenakzeptor reagieren und damit einen kationischen Charakter hervorrufen. Durch die Anwesenheit von beispielsweise einer Carbonsäuregruppe und einer Aminogruppen kann je nach pH-Wert auch ein zwitterionischer Charakter des Moleküls resultieren. Das heißt das jeweilige Molekül enthält unterschiedlich geladene Gruppen, ist jedoch insgesamt elektrisch neutral. Bekanntermaßen wird der pH-Wert, bei dem das jeweilige Molekül insgesamt, das heißt nach außen hin, elektrisch neutral ist, als isoelektrischer Punkt bezeichnet. Demzufolge wird zur Herstellung von organischen Anionen einer alpha-Aminosäure grundsätzlich ein pH-Wert eingestellt, der größer als der isoelektrischen Punkt der jeweiligen Aminosäure ist.

LDH können durch die folgende allgemeine Formel (I) beschrieben werden:

$$[M^{2+}_{(1-x)}M^{3+}_{x}(OH)_2][A^{y-}_{(x/y)}] \cdot nH_2O \qquad (I)$$

wobei $M^{2+}$ für zweiwertige metallische Kationen, $M^{3+}$ für dreiwertige metallische Kationen und $A^{y-}$ für Anionen der mittleren Valenz y steht. Unter mittlerer Valenz ist im Rahmen der vorliegenden Erfindung der Mittelwert der Valenz der gegebenenfalls unterschiedlichen eingelagerten Anionen zu verstehen. Wie dem Fachmann leicht ersichtlich ist, können unterschiedliche Anionen, die in ihrer Valenz unterschiedlich sind (beispielsweise Karbonat, Nitrat, aus EDTA erhältliche Anion etc.) je nach ihrem jeweiligen Anteil an der Gesamtmenge von Anionen (Gewichtungsfaktor) zu einer jeweils individuellen mittleren Valenz beitragen. Für x sind Werte von 0,05 bis 0,5 bekannt, während der Anteil an Kristallwasser mit Werten von $n = 0$ bis 10 sehr unterschiedlich sein kann. Dabei befinden sich die zwei- und dreiwertigen Metallkationen sowie Hydroxidionen in regelmäßiger Anordnung kantenverknüpfter Oktaeder in den positiv geladenen Metallhydroxidschichten (erster Klammerausdruck in Formel (I)) sowie die interkalierten Anionen in den jeweiligen negativ geladenen Zwischenschichten (zweiter Klammerausdruck in Formel (I)), wobei zusätzlich Kristallwasser enthalten sein kann.

Die im Rahmen der vorliegenden Erfindung vorteilhaft einzusetzenden LDH werden beschrieben durch die Formel (I):

$$[M^{2+}_{(1-x)}M^{3+}_{x}(OH)_2][A^{y-}_{(x/y)}] \cdot nH_2O \qquad (I)$$

wobei

die zweiwertigen metallischen Kationen $M^{2+}$ ausgewählt werden aus der Gruppe bestehend aus $Zn^{2+}$, $M^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$ und Mischungen davon, ganz besonders bevorzugt $Zn^{2+}$ oder $Mg^{2+}$,

die dreiwertigen metallischen Kationen $M^{3+}$ ausgewählt werden aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ und Mischungen davon, bevorzugt $Al^{3+}$, $Bi^{3+}$ und/oder $Fe^{3+}$, insbesondere $Al^{3+}$,

die Anionen $A^{y-}$ zumindest anteilig mindestens ein organisches Anion einer alpha-Aminosäure umfassen,

x einen Wert von 0,05 bis 0,5, insbesondere 0,15 bis 0,4, ganz besonders bevorzugt von 0,25 bis 0,35 und

n einen Wert von 0 bis 10 einnimmt.

Die ganz besonders bevorzugten LDH enthalten folgende Kationen/Anionen Kombinationen: $Zn^{2+}$/$Al^{3+}$/Anionen von Cystin und/oder Phenylalanin, $Mg^{2+}$/ $Al^{3+}$/Anionen von Cystein.

Die Herstellung von LDH kann nach an sich bekannten Verfahren, wie sie beispielsweise in E. Kanezaki, Preparation of Layered Double Hydroxides in Interface Science and Technology, Vol. 1, Chapter 12, Page 345 ff. - Elsevier, 2004, ISBN 0-12-088439-9 beschrieben sind, erfolgen. Weitere Informationen über die Synthese von LDH sind beispielsweise in D.G. Evans et. al., "Preparation of Layered Double Hydroxides", Struct Bond (2006) 119, pages 89-119 [DOI 10.1007/430_006, Springer Berlin Heidelberg 2005] beschrieben.

Grundsätzlich kann die Herstellung von LDH aus Mischungen von anorganischen Salzen der metallischen Kationen unter Einhaltung der erforderlichen und/oder gewünschten Verhältnisse (Stöchiometrien) von zweiwertigen und dreiwertigen metallischen Kationen in wässriger Phase bei definierten, konstant gehaltenen basischen pH-Werten erfolgen. Erfolgt die Synthese in Gegenwart von Kohlendioxid, beispielsweise unter atmosphärischen Bedingungen und/oder durch Zugabe von Karbonaten, enthalten die LDH in der Regel Karbonat als interkaliertes Anion. Grund hierfür ist, dass das Karbonat eine hohe Affinität zur Einlagerung in die Schichtstruktur der LDH aufweist. Sofern unter Ausschluss von Kohlendioxid und Karbonaten (beispielsweise Stickstoff- oder Argon-Schutzgasatmosphäre, nicht Karbonathaltige Salze) gearbeitet wird, enthalten die LDH die anorganischen Anionen der Metallsalze, beispielsweise Chloridionen, als interkalierte Anionen.

Die Synthese kann auch unter Ausschluss von Kohlendioxid (Schutzgasatmosphäre) beziehungsweise Karbonat und in Anwesenheit von beispielsweise organischen Anionen oder deren saurer Vorstufen, welche nicht als Anion in den Metallsalzen vorhanden sind, durchgeführt werden. Dabei erhält man in der Regel ein gemischtes Hydroxid, welches die entsprechenden organischen Anionen interkaliert hat.

Durch die oben genannte Methode, die so genannte direkte Kopräzipitationsmethode (direct coprecipitation method), erhält man also in einer Ein-Schritt-Synthese die gewünschten LDH.

Im Rahmen der vorliegenden Erfindung hat sich gezeigt, dass der Einsatz der direkten Kopräzipitationsmethode als besonders vorteilhaft anzusehen ist. Von Vorteil ist es dabei, wenn man unter Schutzgasatmosphäre die Metallsalze zu einer vorlegten wässrigen, basischen Lösung der erfindungsgemäß zu interkalierenden organischen Anionen von alpha-Aminosäuren tropft und dabei durch kontrollierte Zugabe einer Base, beispielsweise Natronlauge, den pH-Wert konstant hält. Um eine kontrollierte und effektive Kristallisation zu erreichen, werden die Metallsalzlösungen vorteilhaft langsam, das heißt je nach Konzentrationen und Mengen der zuzutropfenden und vorzugelegenden Lösungen, innerhalb von etwa 1 bis 10 Stunden, insbesondere 2 bis 5 Stunden, zugetropft. Nach vollständigem Zutropfen erfolgt dann vorteilhafterweise eine Alterung beziehungsweise ein weiteres Rühren der Suspension von etwa 1 Stunde bis zu 10 Tagen, insbesondere zwischen 2 und 24 Stunden, um einen möglichst vollständigen Umsatz zu gewährleisten. Die LDH werden dann nach Zentrifugation und mehrfacher Waschung mit Wasser in Form einer Aufschlämmung erhalten und können als solche in wasserbasierenden Korrosionsschutzgrundierungsmitteln eingesetzt werden. Nach entsprechender Trocknung bei Temperaturen zwischen beispielsweise zwischen 20°C und 40°C werden die LDH als Pulver erhalten und können dann in lösemittelbasierenden Korrosionsschutzgrundierungsmitteln eingesetzt werden.

Dabei wird im Rahmen der vorliegenden Erfindung vorteilhafterweise die zudosierte Menge von dreiwertigen Metallkationen so gewählt, dass ein Verhältnis organisches Anion/$M^{3+}$ zwischen 1:1 bis 10:1, insbesondere vorteilhaft zwischen 1:1 und 5:1, resultiert.

Der pH-Wert bei der Herstellung der LDH wird jeweils oberhalb des isoelektrischen Punkts der jeweils eingesetzten alpha-Aminosäure gewählt und dabei vorteilhaft während der gesamten Synthese konstant gehalten. Je nach gewünschter Zusammensetzung (beispielsweise Wahl der metallischen Kationen $M^{2+}$/$M^{3+}$ und/oder der organischen Anionen beziehungsweise der jeweiligen Ausgangsstoffe zur Erzeugung dieser Komponenten) ergibt sich in der Regel ein optimaler pH-Wert, der vom Fachmann auf einfache Weise angepasst werden kann und beispielsweise zwischen 7,5 und 11 liegt. Für die ganz besonders bevorzugten LHD umfassend $Zn^{2+}$ oder $Mg^{2+}$ und $Al^{3+}$ als metallische Kationen und organische Anionen der oben genannten besonders bevorzugten alpha-Aminosäuren ist der pH-Wert insbesondere zwischen 7,5 und 11 zu wählen und selbstverständlich ebenfalls während der gesamten Synthese konstant zu halten.

Ebenfalls vorteilhaft eingesetzt wird im Rahmen der vorliegenden Erfindung die so genannte anionische Austauschreaktionsmethode (anionic exchange reaction method). Hierbei wird die Eigenschaft der LDH, interkalierte Anionen austauschen zu können, ausgenutzt. Die Schichtstruktur der kationischen gemischten Metallhydroxidschichten der LDH bleibt dabei erhalten. Zunächst werden bereits hergestellte LDH, beispielsweise nach der Kopräzipitationsmethode unter Schutzgasatmosphäre hergestellte LDH, welche im Vergleich zum Karbonat gut austauschbare Anionen wie Chlorid oder Nitrat enthalten, in wässriger alkalischer Lösung unter Schutzgasatmosphäre suspendiert. Anschließend wird diese Suspension oder Aufschlämmung unter Schutzgasatmosphäre zu einer wässrigen alkalischen Lösung der zu interkalierenden organischen Anionen einer alpha-Aminosäure gegeben und für eine gewisse Zeit, beispielsweise 1 Stunde bis 10 Tage, insbesondere 1 bis 5 Tage, gerührt. Die LDH werden dann wiederum nach Zentrifugation und mehrfacher Waschung mit Wasser in Form einer Aufschlämmung erhalten und können als solche in wasserbasierenden Korrosionsschutzgrundierungsmitteln eingesetzt werden. Nach entsprechender Trocknung bei Temperaturen zwischen beispielsweise zwischen 20°C und 40°C werden die LDH als Pulver erhalten und können dann in lösemittelbasierenden Korrosionsschutzgrundierungsmitteln eingesetzt werden.

Auch im Rahmen der anionischen Austauschreaktionsmethode ist es von Vorteil, die Menge an zu interkalierenden Anionen so zu wählen, dass das Verhältnis organisches Anion/$M^{3+}$ zwischen 1:1 bis 10:1, insbesondere vorteilhaft zwischen 1:1 und 5:1, liegt.

Der pH-Wert der Ionenaustauscherlösung wird wiederum so eingestellt, dass er oberhalb des isoelektrischen Punkts der jeweils eingesetzten alpha-Aminosäure liegt, beispielsweise zwischen 7,5 und 11. Für die ganz besonders bevorzugten LHD umfassend $Zn^{2+}$ oder $Mg^{2+}$ und $Al^{3+}$ als metallische Kationen und organische Anionen der oben genannten besonders bevorzugten alpha-Aminosäuren ist der pH-Wert insbesondere zwischen 7,5 und 11 zu wählen und selbstverständlich ebenfalls während der gesamten Synthese konstant zu halten.

Alle oben genannten Reaktionsschritte erfolgen - soweit nicht anders angegeben - im Rahmen der vorliegenden Erfindung vorteilhaft zwischen 10°C und 80°C, insbesondere bei Raumtemperatur, das heißt zwischen etwa 15 und 25°C.

Ebenfalls möglich ist die Synthese von organische Anionen enthaltenden LDH durch die so genannte Rekonstruktionsmethode. Dabei werden beispielsweise bereits vorhandene LDH in Pulverform für einige Stunden auf einige hundert Grad Celsius erhitzt (beispielsweise 3 Stunden auf 450°C). Die LDH Struktur kollabiert und flüchtige und/oder thermisch zersetzbare interkalierten Anionen sowie das Kristallwasser können entweichen. Durch die extreme Behandlung zerfällt beispielsweise das Karbonat, wobei Kohlendioxid und Wasser entweichen. Zurück bleibt eine amorphe Mischung von Metalloxiden. Durch Zugabe von wässrigen Lösungen der zu interkalierenden Anionen unter Schutzgasatmosphäre wird die LDH Struktur wiederhergestellt und es entstehen die gewünschten LDH. Insbesondere wird diese Methode bei Einsatz von käuflich erworbenen LDH, die synthese- und lagerungsbedingt häufig das sehr affine, gut interkalierende Karbonat enthalten, eingesetzt.

Allerdings ist es von Vorteil im Rahmen der vorliegenden Erfindung die LDH durch die direkte Kopräzipitationsmethode und/oder die anionische Austauschreaktionsmethode, ganz besonders bevorzugt durch die direkte Kopräzipitationsmethode, herzustellen. Dabei kommen insbesondere Nitrat- und/oder Chloridsalze der jeweiligen Metallkationen zum Einsatz. Diese anorganischen Anionen lassen sich im Vergleich zum Karbonat gut austauschen und lassen damit die Herstellung von LDH mit hohem Anteil der gewünschten organischen Anionen zu. Insbesondere muss nicht, wie bei der Rekonstruktionsmethode, eine extreme thermische Behandlung erfolgen, um dadurch das LDH-affine Karbonat auszutreiben. Hinzu kommt, dass bei den erfindungsgemäß bevorzugten Methoden eine kontrollierte Ausbildung der LDH-Struktur durch langsame und steuerbare Zugabe der Metallsalzlösungen ermöglicht wird (direkte Kopräzipitationsmethode) beziehungsweise die LDH-Struktur während der Synthese erhalten bleibt (anionische Austauschreaktionsmethode). Keiner dieser Vorteile ist bei der Rekonstruktionsmethode gegeben, sodass die so hergestellten LDH häufige Fehlstellen in Ihrer Kristallstruktur aufweisen und die Methode lediglich beim $Mg^{2+}$/$Al^{3+}$-System zu angemessenen Ergebnissen führt, da lediglich dieses System die hierfür notwendige Befähigung zur thermodynamischen Selbstreorganisation unter den gegebenen Bedingungen aufweist.

Die im Rahmen der vorliegenden Erfindung hergestellten LDH können neben den organischen Anionen von alpha-Aminosäuren synthese- und lagerungsbedingt bestimmte Mengen anorganischer Anionen, beispielsweise Karbonat, Nitrat, Chlorid und/oder Hydroxidionen, enthalten. Es ist aber jeweils ein signifikanter Anteil von organischen Anionen von alpha-Aminosäuren enthalten. Bevorzugt sind die organischen Anionen von alpha-Aminosäuren in einem solchen Anteil vorhanden, dass durch diese Anionen die positive Schichtladung der Metallhydroxidschichten, erzeugt durch die dreiwertigen Metallkationen, zu mehr als 15 % kompensiert wird (Ladungskompensationsgrad von mehr als 15 %). Besonders bevorzugt beträgt der Ladungskompensationsgrad mehr als 20 %, insbesondere mehr als 30 % und ganz besonders bevorzugt mehr als 35 %. Die Bestimmung des Ladungskompensationsgrad erfolgt im Rahmen der vorliegenden Erfindung anhand von dem Fachmann an sich geläufigen quantitativen element- beziehungsweise elementaranalytischen Messtechniken. So lassen sich die Metallatome der LDH Schichten sowie schwerere Heteroatome wie insbesondere Schwefel über die Elementanalyse mittels ICP-OES (inductively coupled plasma optical emission spectroscopy) quantitativ bestimmen, während die Elementaranalyse für LDH Proben, deren organische Anionen nur die Elemente C/H/N/O umfassen, eine quantitative Bestimmung des Gehalts dieser Anionen ermöglicht. Für die ICP-OES wird eine wie oben beschrieben hergestellte LDH-Probe nach Waschung und Trocknung mit einer anorganischen Säure, beispielsweise Salpetersäure, versetzt und dadurch aufgeschlossen, während die Elementaranalyse nach der allgemein bekannten Verbrennungsmethode mit anschließender gaschromatischer Trennung und quantitativer Bestimmung (WLD) der Oxidations- bzw. Reduktionsprodukte durchgeführt wird. Aus den elementanalytisch bestimmten Gehalten der Metallatome sowie der schwereren Heteroatome (insbesondere Schwefel) der organischen Anionen (das heißt eines spezifischen, im Anion gebundenen schweren Heteroatoms, insbesondere Schwefel wie im Falle von Cystein und Cystin) werden die Mengen der dreiwertigen Metallkationen, insbesondere des $Al^{3+}$, sowie des jeweiligen organischen Anions bestimmt und über das Verhältnis dieser Mengen unter Berücksichtigung der entsprechenden Atom- beziehungsweise Molekulargewichte der Ladungskompensationsgrad ermittelt. Der theoretische Maximalwert von 100 % entspricht dabei einem Äquivalentverhältnis von positivem Ladungsäquivalent des dreiwertigen Metallkations zu negativem Ladungsäquivalent des organischen Anions der alpha-Aminosäure von eins. Bei LDH Phasen, deren organische Anionen keine spezifischen, über die ICP-OES bestimmbaren Heteroatome enthalten, lassen die elementaranalytisch bestimmten Gehalte der Atome C, H, N und O unter Berücksichtigung der bekannten Summenformel des jeweiligen organischen Anions sowie des Gehalts an physisorbiertem Wasser (ermittelt aus dem Gewichtsverlust bis 150°C einer thermischen Gewichtsverlustanalyse, TGA) eine Berechnung des Gehalts dieser Anionen in der LDH-Probe zu.

Die bevorzugten Ladungskompensationsgrade der entsprechenden organischen Anionen lassen sich insbesondere durch den Einsatz der bevorzugten Herstellungsmethoden, nämlich der direkten Kopräzipitationsmethode und der anionischen Austauschreaktionsmethode, unter den oben beschriebenen bevorzugten Bedingungen (beispielsweise pH-Wert oder Verhältnis von organischem Anion zu dreiwertigem Metallkation) erreichen.

Die LDH-Komponente (B) wird beispielsweise in einem Anteil von 0,1 bis 30 Gew.-%, insbesondere bevorzugt von 1 bis 20 Gew.-%, ganz besonders bevorzugt von 2 bis 15 Gew.-% und in einer besonders vorteilhaften Ausführungsform von 3 bis 10 Gew.-%, jeweils bezogen auf die Gesamtmenge des erfindungsgemäß einzusetzenden Korrosionsschutzgrundierungsmittels, eingesetzt. Bezogen auf den Festkörper des Korrosionsschutzgrundierungsmittels (Bestimmung siehe oben) beträgt der Anteil der LDH-Komponente (B) beispielsweise 0,2 bis 60 Gew.-%, insbesondere bevorzugt 2 bis 40 Gew.-%, ganz besonders bevorzugt 4 bis 30 Gew.-% und in einer besonders vorteilhaften Ausführungsform 6 bis 20 Gew.-%.

Das erfindungsgemäß einzusetzende Korrosionsschutzgrundierungsmittel enthält in der Regel zudem mindestens ein organisches Lösemittel und/oder Wasser. Es werden organische Lösemittel eingesetzt, die die Vernetzung der erfindungsgemäßen Korrosionsschutzgrundierungsmittel nicht inhibieren und/oder mit den sonstigen Bestandteilen der erfindungsgemäßen Korrosionsschutzgrundierungsmittel chemische Reaktionen eingehen. Der Fachmann kann daher geeignete Lösemittel leicht anhand ihres bekannten Lösevermögens und ihrer Reaktivität auswählen. Beispiele für solche Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat oder Ethylethoxypropionat, Ether, Alkohole, Chlorkohlenwasserstoffe oder Mischungen aus den vorgenannten Lösemitteln.

Darüber hinaus kann das erfindungsgemäß einzusetzende Korrosionsschutzgrundierungsmittel noch mindestens einen Zusatzstoff enthalten. Beispiele für derartige Zusatzstoffe sind rückstandsfrei oder im Wesentlichen rückstandsfrei thermisch zersetzbare Salze, Reaktivverdünner, Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Verdickungsmittel, Sag-Control-Agents (SCAs), Flammschutzmittel, weitere Korrosionsinhibitoren, Wachse, Biozide und Mattierungsmittel. Sie werden in den üblichen und bekannten Mengen eingesetzt. Zu beachten ist, dass das erfindungsgemäß einzusetzende Korrosionsschutzgrundierungsmittel bevorzugt vollständig frei von chromhaltigen Korrosionsinhibitoren ist. Insbesondere bevorzugt ist das erfindungsgemäß einzusetzende Korrosionsschutzgrundierungsmittel vollständig frei von Chrom und chromhaltigen Substanzen, d.h. also es enthält maximal Spuren und Verunreinigungen von Chrom und chromhaltigen Substanzen.

Der Festkörpergehalt des erfindungsgemäß einzusetzenden Korrosionsschutzgrundierungsmittels kann je nach den Erfordernissen des Einzelfalls variieren. In erster Linie richtet sich der Festkörpergehalt nach der für die Applikation erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörper des Korrosionsschutzgrundierungsmittels bei 20 bis 90 Gew.-%, besonders bevorzugt bei 30 bis 80 Gew.-% und insbesondere bevorzugt bei 40 bis 60 Gew.-%.

Die Herstellung des erfindungsgemäß einzusetzenden Korrosionsschutzgrundierungsmittels kann unter Einsatz der für die Herstellung von Beschichtungsmitteln üblichen und bekannten Mischverfahren und Mischaggregaten erfolgen.

Das erfindungsgemäß einzusetzende Korrosionsschutzgrundierungsmittel wird im Rahmen des erfindungsgemäßen Verfahrens direkt auf ein metallisches Substrat appliziert. Direkt applizieren bedeutet, dass vor der Applikation des Korrosionsschutzgrundierungsmittels kein anderes, zur Bildung einer organisch-polymeren Matrix befähigtes Beschichtungsmittel oder ein Konversionsbeschichtungsmittel appliziert wird. Das Korrosionsschutzgrundierungsmittel ist also das erste applizierte Beschichtungsmittel.

Die Applikation des erfindungsgemäß einzusetzenden Korrosionsschutzgrundierungsmittels auf ein metallisches Substrat kann in den im Rahmen der Fahrzeugindustrie und Luftfahrtindustrie üblichen Schichtdicken (Nassfilmschichtdicken) im Bereich von beispielsweise 5 bis 400 $\mu$m, bevorzugt 10 bis 200 $\mu$m, besonders bevorzugt 15 bis 100 $\mu$m, erfolgen. Dabei werden beispielsweise die bekannten Methoden wie Spritzen, Rakeln, Streichen, Giessen, Tauchen, Tränken, Träufeln oder Walzen angewendet. Vorzugsweise werden Spritz- oder Rakelmethoden angewandt.

Nach der Applikation des erfindungsgemäß einzusetzenden Korrosionsschutzgrundierungsmittels wird daraus ein Polymerfilm gebildet. Das aufgebrachte Korrosionsschutzgrundierungsmittel wird nach bekannten Methoden gehärtet. Bevorzugt wird physikalisch oder thermisch gehärtet, da im Rahmen der vorliegenden Erfindung physikalisch und thermisch härtende Systeme bevorzugt sind. Ganz besonders bevorzugt ist die thermische Härtung fremdvernetzender 2K-Systeme.

Die physikalische Härtung erfolgt bei Temperaturen von bevorzugt 5 bis 160°C, insbesondere von 10 bis 100°C und ganz besonders bevorzugt von 20°C bis 60°C. Die benötigte Zeitdauer ist dabei stark abhängig von dem verwendeten Beschichtungssystem und der Aushärtungstemperatur. Von den physikalisch härtbaren Korrosionsschutzgrundierungsmittel sind diejenigen bevorzugt, die bei den angegebenen Temperaturen innerhalb von zwei Stunden eine klebfreie und damit überlackierbare Beschichtung ergeben.

Die thermische Härtung erfolgt bevorzugt bei Temperaturen von 10 bis 200°C, insbesondere 10 bis 100°C, ganz besonders bevorzugt von 10 bis 50°C. Diese bevorzugten, eher niedrigen Härtungstemperaturen ergeben sich aus dem Umstand, dass für die bevorzugten Zwei-Komponenten Systeme, insbesondere ein Epoxidharz/Polyamin-System, bekanntermaßen nur niedrige Härtungstemperaturen notwendig sind. Die Zeitdauer der thermischen Härtung kann je nach Einzelfall stark variieren und liegt beispielsweise zwischen 5 min und 5 Tagen, insbesondere zwischen 1 Stunde und 2 Tagen.

Der Härtung kann je nach Einzelfall und eingesetzten Bindemittel/Vernetzungsmittel Systemen gegebenenfalls ein Ablüften bei beispielsweise Raumtemperatur (etwa 15 und 25°C) für beispielsweise 1 bis 60 min und/oder eine Trocknung bei beispielsweise leicht erhöhten Temperaturen von 30 bis 80°C für beispielsweise 1 bis 60 min vorausgehen. Unter Ablüften und Trocknung ist im Rahmen der vorliegenden Erfindung ein Abdunsten von organischen Lösemitteln und/oder Wasser zu verstehen, wodurch der Lack trocken, aber noch nicht gehärtet wird beziehungsweise noch kein vollständig vernetzter Lackfilm gebildet wird.

Durch die Härtung erhält man dann das erfindungsgemäße beschichtete Metallsubstrat, welches ebenfalls Gegenstand der vorliegenden Erfindung ist.

Nach der Härtung des Korrosionsschutzmittels können noch weitere übliche und bekannte Beschichtungsmittel, die zur Bildung einer auf einer polymeren Matrix basierenden Beschichtungsschicht befähigt sind, nach üblichen und bekannten Methoden appliziert werden. Die zugehörigen Schichtdicken (Nassfilmschichtdicken) der jeweiligen Einzelschichten liegen in den gängigen Bereichen, beispielsweise zwischen 5 bis 400 $\mu$m, insbesondere zwischen 20 und 200 $\mu$m. Nach der Applikation folgt dann die Härtung der Beschichtungen nach den ebenfalls bekannten und üblichen Methoden. Die einzelnen Beschichtungen können auch so hergestellt werden, dass sie nacheinander ohne jeweilige vollständige Härtung der Einzelschichten aufgebracht werden und dann in einer abschließenden gemeinsamen Härtung gehärtet werden (Nass-in-nass-Verfahren). Natürlich ist auch die jeweils einzelne vollständige Härtung der Schichten möglich.

Bevorzugt umfasst das erfindungsgemäße Verfahren die Applikation und Härtung mindestens eines weiteren Beschichtungsmittels, wodurch eine Mehrschichtbeschichtung gebildet wird.

Im Rahmen der Automobilindustrie kann es sich bei den weiteren Beschichtungsschichten bekanntermaßen um übliche Füller-, Basislack- und Klarlackschichten handeln. Bevorzugt wird demnach eine Mehrschichtbeschichtung hergestellt, die neben der Korrosionsschutzbeschichtung noch mindestens eine Füller-, eine Basislack- und eine Klarlackschicht umfasst oder aus den genannten Schichten besteht Bevorzugt wird genau eine der genannten Schichten aufgebaut. Im Rahmen der Luftfahrtindustrie kann es sich um die typischen einschichtigen Decklackierungen, beispielsweise auf Basis von (2-Komponenten)-Polyurethansystemen, handeln. In einer ebenfalls bevorzugten Variante der vorliegenden Erfindung wird somit eine Mehrschichtbeschichtung hergestellt, die neben der Korrosionsschutzbeschichtung noch eine Decklackierung umfasst oder aus diesem beiden Schichten besteht.

Natürlich kann die Applikation der gegebenenfalls weiteren Beschichtungsmittel auch vor der vollständigen Härtung des Korrosionsschutzmittels erfolgen. Das heißt das Korrosionsschutzmittel wird vor der Applikation der weiteren Beschichtungsmittel lediglich abgelüftet und/oder getrocknet (Nass-in-nass-Verfahren).

Als metallische Substrate kommen letztlich alle metallischen Substrate, die beispielsweise im Rahmen der Metallindustrie (beispielsweise Maschinenbau und Ausrüstung, Automobilindustrie (Fahrzeugbau), Luft- und Raumfahrtindustrie, Schiffbauindustrie, Elektroindustrie, Feinmechanikindustrie) eingesetzt werden, in Frage. Vorteilhaft werden Aluminium, Aluminiumlegierungen wie insbesondere Aluminiumkupferlegierungen, ganz besonders bevorzugt die AA2024-T3 Legierung, sowie unlegierter und legierter Stahl, eingesetzt.

Im Folgenden soll die Erfindung anhand von Beispielen erläutert werden.

**Beispiele**

A) Herstellung von LDH

Es wurden unterschiedliche LDH auf Basis von Zink/Aluminium bzw. Magnesium/Aluminium nach der direkten Kopräzipitationsmethode hergestellt. Zum Erhalt der erfindungsgemäß einzusetzenden LDH wurden L-Phenylalanin (Metallkationenkombination $Zn^{2+}/Al^{3+}$) und L-Cystein (Metallkationenkombination $Mg^{2+}/Al^{3+}$) eingesetzt. Zum Vergleich wurden LDH hergestellt, die das als sehr wirksamen, aber hochtoxischen Korrosionsinhibitor bekannte Anion Chromat enthalten.

LHD enthaltend L-Phenylalanin:

Einer 0,39 molaren wässrigen Lösung von L-Phenylalanin, die durch Zugabe einer 3-molaren NaOH-Lösung auf pH 8 eingestellt wurde, wird eine wässrige Mischung aus $ZnCl_2 \cdot 6H_2O$ (0,52 molar) und $AlCl_3 \cdot 6H_2O$ (0,26 molar) bei Raumtemperatur unter Stickstoffatmosphäre und ständigem Rühren über 3 Stunden mit konstanter Dosierrate zugegeben, wobei die zudosierte Menge Kationen so gewählt wird, dass ein Molverhältnis des L-Phenylalanin zum dreiwertigen Al-Kation von 1,5:1 resultiert. Dabei wird der pH-Wert durch Zugabe einer 3-molaren NaOH-Lösung konstant bei pH = 8 gehalten. Nach Zugabe der wässrigen Mischung der Metallsalze wird die resultierende Suspension bei Raumtemperatur 3 Stunden gerührt beziehungsweise gealtert. Der resultierende Niederschlag wird durch Zentrifugieren isoliert und 4 Mal mit entionisiertem Wasser gewaschen. Die resultierende Aufschlämmung des weißen Reaktionsprodukts wird für 24 h bei 30°C im Vakuum getrocknet und die LDH dann als weißes Pulver erhalten.

LHD enthaltend L-Cystein:

Einer 0,52 molaren wässrigen Lösung von L-Cystein, die durch Zugabe einer 3-molaren NaOH-Lösung auf pH 10 eingestellt wurde, wird eine wässrige Mischung aus $MgCl_2 \cdot 6H_2O$ (0,52 molar) und $AlCl_3 \cdot 6H_2O$ (0,26 molar) bei Raumtemperatur unter Stickstoffatmosphäre und ständigem Rühren über 3 Stunden mit konstanter Dosierrate zugegeben, wobei die zudosierte Menge Kationen so gewählt wird, dass ein Molverhältnis des L-Cystein zum dreiwertigen Al-Kation von 2:1 resultiert. Dabei wird der pH-Wert durch Zugabe einer 3-molaren NaOH-Lösung konstant bei pH = 10 gehalten. Nach Zugabe der wässrigen Mischung der Metallsalze wird die resultierende Suspension bei Raumtemperatur 3 Stunden gerührt beziehungsweise gealtert. Der resultierende Niederschlag wird durch Zentrifugieren isoliert und 4 Mal mit entionisiertem Wasser gewaschen. Die resultierende Aufschlämmung des weißen Reaktionsprodukts wird für 24 h bei 30°C im Vakuum getrocknet und die LDH dann als weißes Pulver erhalten. Die LDH (theoretische Summenformel bei einem theoretischen Maximalwert des Ladungskompensationsgrads von 100 % durch das monovalente L-Cystein-anion: $Mg_2Al(OH)_6$(L-Cystein)) weisen einen Ladungskompensationsgrad von 41 % auf (quantitativ elementanalytisch gemessen über ICP-OES, wobei in der Berechnung das Cysteinanion als monovalentes Anion berücksichtigt wurde).

LDH enthaltend Chromat:

Einer 0,52 molaren wässrigen alkalischen Lösung (pH = 9,6) von Natriumchromat ($Na_2CrO_4$) wird eine wässrige Mischung aus $MgCl_2 \cdot 6H_2O$ (0,52 molar) und $AlCl_3 \cdot 6H_2O$ (0,26 molar) bei Raumtemperatur unter Stickstoffatmosphäre und ständigem Rühren über 3 Stunden mit konstanter Dosierrate zugegeben, wobei die zudosierte Menge Kationen so gewählt wird, dass ein Molverhältnis des Chromat zum dreiwertigen Al-Kation von 2:1 resultiert. Dabei wird der pH-Wert durch Zugabe einer 3-molaren NaOH-Lösung konstant bei pH = 10 gehalten. Nach Zugabe der wässrigen Mischung der Metallsalze wird die resultierende Suspension bei Raumtemperatur 3 Stunden gerührt beziehungsweise gealtert. Der resultierende Niederschlag wird durch Zentrifugieren isoliert und 4 Mal mit entionisiertem Wasser gewaschen. Die resultierende Aufschlämmung des weißen Reaktionsprodukts wird für 24 h bei 30°C im Vakuum getrocknet und die LDH dann als weißes Pulver erhalten.

B) Herstellung von Korrosionsschutzgrundierungsmitteln

Es wurden Korrosionsschutzgrundierungsmittel enthaltend jeweils eine der erfindungsgemäßen LDH Phasen ($Zn_2Al(OH)_6$(L-Phenylalanin) und $Mg_2Al(OH)_6$(L-Cystein)) sowie die Vergleichs-LDH ($Zn_2Al(OH)_6$(½·$CrO_4$)) hergestellt. Der Anteil an LDH lag jeweils bei 4,7 Gew.-%, bezogen auf die Gesamtmenge des erfindungsgemäßen Korrosionsschutzgrundierungsmittels (entsprechend 10 Gew.-%, bezogen auf den Festkörper des Korrosionsschutzgrundierungsmittels), und wurde vor Komplettierung des Lacks in die Polymerkomponente (vgl. Tabelle 1) eingearbeitet. Ebenfalls hergestellt wurde ein Referenz-Beschichtungsmittel für die unter D2) angeführte Bestimmung der Korrosionsbeständigkeit. In diesem Referenz-Beschichtungsmittel wurde auf den Einsatz von LDH verzichtet. Bei dem Korrosionsschutzgrundierungsmittel handelte es sich um ein Epoxidharz/Polyaminbasiertes (2K)-Beschichtungsmittel. Die Bestandteile und deren Mengen der Polymerkomponente und der Vernetzungskomponente des Korrosionsschutzgrundierungsmittels sind in den Tabellen 1 und 2 angegeben. Die Komponenten wurden in einem Verhältnis von 3:1 (Polymerkomponente:Vernetzungskomponente) unmittelbar vor der Applikation auf ein Substrat gemischt.

Tabelle 1: Zusammensetzung Polymerkomponente

| Bestandteil | Menge |
|---|---|
| Epikote 834-x-80[1] | 52,2 |
| Beckopox EM 460/60IBX[2] | 13,2 |
| Handelsübliches Netz- und Dispergieradditiv | 1,2 |
| Xylol | 7,8 |
| Methoxypropylacetat | 15,5 |

(fortgesetzt)

| Bestandteil | Menge |
|---|---|
| Butylacetat | 10,0 |

[1] Handelsübliches Epoxidharz von Momentive, Epoxidgruppengehalt (bezogen auf festes Harz) = 4000 mmol/kg, Festkörper = 80 % in Xylene,
[2] Handelsübliches Epoxidharz von Cytec, Festkörper = 60 % in Xylene,

Tabelle 2: Zusammensetzung Vernetzungskomponente

| Bestandteil | Menge |
|---|---|
| Cardolite NC 562[1] | 49,6 |
| Merginamid L 190[2] | 9,2 |
| Ancamine K54[3] | 0,4 |
| Methoxypropanol | 12,7 |
| Isobutanol | 8,0 |
| Xylol | 15,7 |
| Diethylentriamin | 1,2 |
| Epikote 828[4] | 3,2 |

[1] Handelsübliches Epoxidharz-Vernetzungsmittel (Polyamin) von Cardolite, H-aktiv-Äquivalentmasse 174 g/mol, Festkörper 65 %,
[2] Handelsübliches Epoxidharz-Vernetzungsmittel (Polyamin beziehungsweise Polyaminoamid) H-aktiv-Äquivalentmasse 230 g/mol,
[3] Handelsübliche Bezeichnung für Tris(dimethylaminomethyl)phenol, gängiger Aktivator für Epoxidharz-Vernetzungsmittel (Polyamine),
[4] Handelsübliches Epoxidharz ohne Lösemittel von Momentive, Epoxidgruppengehalt 5300 mmol/kg

C) Herstellung von beschichteten Substraten

Es wurden Substratplatten aus der AA2024-T3-Legierung (Aluminiumkupferlegierung) mit den hergestellten Korrosionsschutzgrundierungsmitteln beschichtet.

Dazu wurden die Substratplatten zunächst mit Isopropanol gesäubert und bei 60°C im Trockenschrank getrocknet. Dann wurden die Platten durch Eintauchen für 3 Minuten in 4 molarer NaOH-Lösung geätzt und anschließend mit Wasser gewaschen. Es folgte ein für 2 Minuten andauerndes Eintauchen der Platten in einer Mischung von Wasser/Salpetersäure (70-%-ig) (2:1, (v/v)), ein nochmaliges Abspülen mit Wasser und ein abschließendes Trocknen der Platten bei 60°C im Trockenschrank.

Auf die so vorbereiteten Substratplatten wurden die Korrosionsschutzgrundierungsmittel enthaltend $Zn_2Al(OH)_6$(L-Phenylalanin), $Mg_2Al(OH)_6$(L-Cystein) und die Vergleichs-LDH $Zn_2Al(OH)_6(\frac{1}{2}\cdot CrO4)$ jeweils mit einem 50 $\mu$m Spiralrakel aufgetragen und anschließend für 24 h bei 25°C gehärtet. Anschließend wurde ein herkömmlicher Zwei-Komponenten Polyurethan-Decklack mit einem 175 $\mu$m Spiralrakel aufgetragen und dann für 24 h bei 25°C gehärtet. Die so hergestellten beschichteten Metallsubstrate wurden für 7 Tage bei 25°C gelagert und anschließend wie unter D2) beschrieben untersucht.

D) Prüfung der Korrosionsbeständigkeit

D1) Gleichstrompolarisationsmessungen

Die Prüfung der Korrosionsbeständigkeit beziehungsweise der Korrosionsinhibierungseffizienz der Anionen von alpha-Aminosäuren erfolgte mittels Gleichstrompolarisationsmessungen (DC polarization). Bekanntermaßen liegt einem Korrosionsprozess eine elektrochemische Reaktion zwischen einem Material, in der Regel einer Metalloberfläche, und dessen Umgebung zugrunde, wobei das Metall oxidiert und entsprechend Metallkationen aus dem festen Material austreten, das heißt also ein Korrosionsstrom fließt. Bei der Gleichstrompolarisationsmessungen handelt sich um eine an sich bekannte elektrochemische Messmethode, die beispielsweise in "Progress in Organic Coatings, 61 (2008) 283-290" beschrieben ist. Dabei wird die Stromantwort eines Systems auf eine Potentialvariation bei konstanter Scanrate gemessen. Aus den resultierenden Messdaten lässt sich dann der Korrosionsstrom ableiten.

Die Korrosionsinhibierungseffizienz I.E. wird anhand der Formel

$$\text{I.E. } (\%) = ((i_0 - i_{inh}) / (i_0)) \cdot 100 \%$$

bestimmt, wobei es sich bei den Parametern um den Korrosionsstrom beziehungsweise die Korrosionsstromdichte (Einheit beispielsweise Ampere pro Quadratzentimeter) der Referenzprobe ($i_0$, Substrat, Elektrolyt) beziehungsweise der jeweiligen Inhibitor-haltigen Probe ($i_{inh}$, Substrat, Elektrolyt enthaltend L-Phenylalanin/L-Cystein/$K_2CrO_4$) handelt. Der Parameter I.E. (%) ist demnach jeweils um die Korrosionsbeständigkeit des Referenzsystems korrigiert; angegeben wird die Verbesserung der Korrosionsbeständigkeit beziehungsweise der Korrosionsinhibierungseffizienz im Verhältnis zur Referenzprobe.

Je niedriger die Korrosionsstromdichte, desto besser ist das Substrat vor der Korrosion geschützt. Dies bedeutet, dass bei niedrigen Werten für $i_{inh}$ und einer damit guten Korrosionsinhibierungseffizienz der Parameter I.E. einen hohen Wert annimmt.

Für die Referenzprobe (bei der definitionsgemäß $i_0 = i_{inh}$ gelten muss), nimmt der Parameter I.E. definitionsgemäß den Wert 0 % an.

Die Messungen wurden mit einem VSP Multichannel Potentiostat/Galvanostat von BioLogic unter Verwendung der entsprechenden, ebenfalls von BioLogic stammende Anwendersoftware EC-Lab V9.95 durchgeführt. Als Elektrolytlösung für die Messungen wurde eine 0,5 M NaCl-Lösung eingesetzt; alle Messungen wurden bei 25°C durchgeführt. Die Menge der Inhibitoren (der Anionen) betrug 2000 ppm in einer 0,5 M Natriumchloridlösung (Volumen 30 ml; 60,4 mg L-Cystein, 60,3 mg L-Phenylalanin, 100,4 mg $K_2CrO_4$), entsprechend einer Konzentration von 0,017 M L-Cystein, 0,012 M L-Phenylalanin und 0,017 M Chromat. Als Elektrode diente neben dem Metall des metallischen Substrats eine Kalomelelektrode (als Referenzelektrode). Die dem Elektrolyt ausgesetzte Oberfläche beträgt 19,6 cm$^2$ (entsprechend des inneren Durchmessers eines auf die beschichtete Fläche aufgeklebten PVC Rohres = Gefäß für die Elektrolytlösung).

Tabelle 3 zeigt die entsprechenden Messergebnisse für die untersuchten Systeme.

Tabelle 3: Korrosionsinhibierungseffizienz für die untersuchten Systeme.

| Korrosionsinhibitor | I.E. (%) |
|---|---|
| L-Phenylalanin | 89,5 |
| L-Cystein | 97,6 |
| $K_2CrO_4$ | 95,6 |

Die Daten belegen, dass die Korrosionsinhibierungseffizienz der im Rahmen des erfindungsgemäßen Verfahrens eingesetzten organischen Anionen von alpha-Aminosäuren vergleichbar mit der Korrosionsinhibierungseffizienz des bekannten, jedoch hochtoxischen hexavalenten Chromats ist. Die metallischen Substrate weisen einen hervorragenden Korrosionsschutz auf, ohne dabei auf hochtoxische Inhibitoren zurückgreifen zu müssen.

D2) Impedanzspektroskopie (Electrochemical Impedance Spectroscopy, EIS)

Die EIS ist eine ebenfalls bekannte Methode zur Analyse elektrochemischer Eigenschaften von unterschiedlichsten Systemen, beispielsweise von mit Elektrolytlösungen überschichteten Oberflächenbeschichtungen. An das zu untersuchende System wird eine sinusförmige Wechselspannung niedriger Amplitude und kontinuierlich variierender Frequenz angelegt, wobei dann der Wechselstromwiderstand (Betrag der Impedanz) sowie die Phasenverschiebung zwischen angelegter Wechselspannung und dem resultierenden Wechselstrom des Systems frequenzabhängig gemessen werden. Bei der Auswertung werden die gemessenen Frequenzspektren an theoretische Ersatzschaltbilder angepasst, die aus Reihen- und/oder Parallelschaltungen verschiedener Impedanzelemente wie ohmschen, kapazitiven und induktiven Widerständen oder sogenannten "constant phase" Elementen (konstante Phasenelemente) bestehen. Bei angemessener Übereinstimmung von gemessenen Spektren und den theoretischen, aus den Ersatzschaltbildern abzuleitenden mathematischen Funktionen (theoretische Spektren), können die im Messsystem real vorhandenen Bestandteile einem (theoretischen) Impedanzelement des Ersatzschaltbildes zugeordnet werden.

Impedanzspektren wurden bei Raumtemperatur im Frequenzbereich von 1 MHz bis 50 mHz mit einer Dichte von zehn Meßwerten pro Dekade mit einem Material Mates Italia 7260 - AMEL 7200 Frequency Response Analyzer (FRA), ausgestattet mit ZedScopes Version 40 Software, aufgenommen, in dem die stromlose Meßanordnung (open circuit voltage Bedingung) durch Anlegen einer sinuidalen Wechselspannung mit der Amplitude von 20 mV gestört wird. Eine Zweielektrodenanordnung wurde verwendet, bei der das beschichtete Aluminiumsubstrat wie in D1) beschrieben als Arbeitselektrode und ein Platindraht als Gegenelektrode eingesetzt wurde. Als Elektrolytlösung für die Messungen wurde eine 0,005 M NaCl-Lösung eingesetzt; alle Messungen wurden bei 25°C durchgeführt.

Es wurden geritzte Beschichtungen untersucht. Hierfür wurden die beschichteten Substrattafeln (siehe C)) unmittelbar vor der Messung mit einem Messer (2 mm Schnittbreite) eingeritzt. Dabei wurden zunächst zwei parallele Schnitte mit einer Länge von 2 cm gesetzt und dann nochmals zwei parallele Schnitte kreuzförmig zu den ersten beiden Schnitten gesetzt. Die dem Elektrolyt ausgesetzte Metalloberfläche beträgt somit etwa 1,6 +/- 0,2 cm$^2$). Ebenfalls gemessen wurde eine geritzte Referenz-Beschichtung, das heißt eine Beschichtung, die aus dem unter B) beschriebenen (2K)-Beschichtungsmittel hergestellt wurde, jedoch keine LDH enthielt.

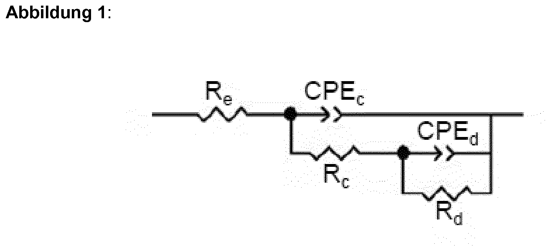

Die Impedanzspektren wurden mittels der Software ZView® Version 2.9c analysiert. Es zeigt sich, dass das Messsystem angemessen über ein Ersatzschaltbild bestehend aus einem ohmschen Widerstand und einem hierzu in Reihe geschalteten kapazitiven Widerstand (sowie einem weiteren Widerstand und konstanten Phasenelementen) für den Elektrolyten, die Beschichtung sowie die oxidische Passivierungsschicht des Substrats beschrieben werden kann (Abbildung 1 - Ersatzschaltbild), wobei der (frequenzunabhängige) ohmsche Widerstand $R_e$ die Elektrolytlösung und der (frequenzabhängige) kapazitive Widerstand $R_c$ die polymere Beschichtung (Schicht mit niedriger Dielektrizitätskonstante) widerspiegelt.

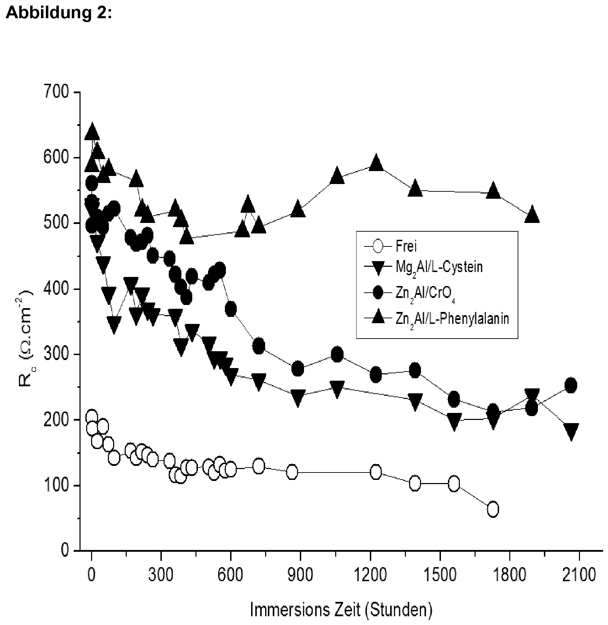

Tabelle 4 zeigt den jeweiligen kapazitiven Widerstand $R_c$ der hergestellten kreuzförmig eingeritzten Beschichtungen, gemessen bei einer Frequenz von 1 MHz, zu unterschiedlichen Zeitpunkten nach dem Ritzen. Abbildung 2 zeigt als zeitlicher Verlauf der Kapazität nochmals die in Tabelle 4 genannten Ergebnisse und zudem weitere Messergebnisse bei weiteren Zeitpunkten. Je höher der jeweilige kapazitive Widerstand, desto höher die Abschirmung der metallischen Oberfläche. Je höher also der kapazitive Widerstand, desto besser ist der Korrosionsschutz. Die Ergebnisse zeigen, daß die erfindungsgemäß hergestellten Beschichtungen im Vergleich zur Beschichtung enthaltend Chromat-LDH vergleichbare oder sogar höhere kapazitive Widerstände aufweisen. Im Vergleich zur Referenz-Beschichtung (Beschichtung ohne LDH) wird eine deutlich höhere Kapazität erreicht. Insbesondere zeigt sich bei der Referenz-Beschichtung über die Zeit ein deutlicher Abfall der Kapazität. Es zeigt sich somit, dass die erfindungsgemäßen Systeme einen hervorragenden Korrosionsschutz bieten.

Tabelle 4: Werte des kapazitiven Widerstand ($R_c$ [$\Omega \cdot cm^{-2}$]) nach 25, 44 und 58 Tagen; Belastung der geritzten Beschichtungen (siehe auch Abbildung 2, zeitlicher Verlauf)

| Beschichtung | t = 0 | t = 600h | t = 1056h | t = 1560h |
|---|---|---|---|---|
| Referenz-Beschichtung (ohne LDH) | 646,9 | 183,6 | | 146,1 |
| LDH ½·CrO4 | 617,6 | 391,9 | 398,4 | 369,6 |
| LDH L-Phenylalanin | 634,4 | | 487,7 | |
| LDH L-Cystein | 651,9 | 497,9 | 493,1 | 486,0 |

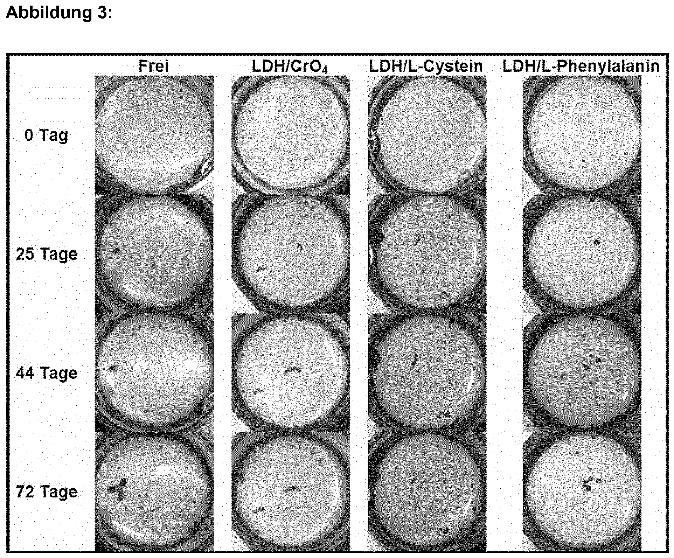

Abbildung 3 zeigt Fotografien der kreuzförmig geritzten Beschichtungen zu den auch in Tabelle 4 spezifizierten Zeitpunkten. Es zeigt sich wiederum, dass die erfindungsgemäß hergestellten Systeme im Vergleich zum Chromat-haltigen System einen vergleichbaren oder sogar besseren Korrosionsschutz aufweisen. So weisen die erfindungsgemäßen Systeme vergleichbare oder sogar geringere Flächenanteile von durch Korrosion geschädigtem Substrat auf. Das Referenz-System (Beschichtung ohne LDH) zeigt die klar schlechtesten Ergebnisse.

Insgesamt zeigt sich also, dass die nach dem erfindungsgemäßen Verfahren hergestellten, erfindungsgemäßen Beschichtungen eine hervorragende Korrosionsbeständigkeit aufweisen, die vergleichbar oder sogar besser als die Korrosionsbeständigkeit von Chromat-haltigen Systemen ist. Gleichzeitig kann auf den Einsatz toxischer Substanzen verzichtet werden.

**Kurzbeschreibung der Abbildungen**

Abbildung 1:

Ersatzschaltbild für die Impedanzspektroskopie zur Beschreibung des realen Messsystems aus dem Experimentalteil D2), das heißt zur entsprechenden Anpassung der experimentell erhaltenen Messdaten.

$R_e$     Widerstand des Elektrolyten

$R_c$     Widerstand der Beschichtung

$R_d$     Widerstand der elektrolytischen Doppelschicht (Oxidschicht des Substrats) zwischen Substrat und Beschichtung

$CPE_c$     "constant phase element" der Beschichtung

$CPE_d$     "constant phase element" der (Oxidschicht des Substrats) elektrolytischen Doppelschicht) zwischen Substrat und Beschichtung

Abbildung 2:

Zeitlicher Verlauf des gemäß Experimentalteil D2) an den geritzten Beschichtungen gemessenen kapazitiven Widerstands. Gezeigt sind die kapazitiven Widerstände bei einer Frequenz von 1 MHz zu unterschiedlichen Zeitpunkten nach dem Ritzen.

Abbildung 3:

Fotographien der gemäß Experimentalteil D2) untersuchten Beschichtungen zu unterschiedlichen Zeitpunkten nach dem Ritzen. Es handelt sich um eine Aufsicht durch das aufgeklebte PVC-Rohr, in dem sich die Elektrolytlösung während der Impedanzmessung befindet.

## Patentansprüche

1. Verfahren zur Herstellung einer Korrosionsschutzbeschichtung, bei dem

    (1) ein Korrosionsschutzgrundierungsmittel enthaltend

        (A) mindestens ein organisches Polymer, wobei es sich um ein Polyadditions-, Polykondensations- und/oder Polymerisationsharz handelt, als Bindemittel und
        (B) mindestens ein synthetisches, organische Anionen enthaltendes schichtförmiges Doppelhydroxid

    direkt auf ein metallisches Substrat aufgebracht wird und
    (2) aus dem in Stufe (1) aufgebrachten Korrosionsschutzgrundierungsmittel ein Polymerfilm gebildet wird,

    wobei das Verfahren **dadurch gekennzeichnet ist, dass**
    das mindestens eine synthetische schichtförmige Doppelhydroxid (B) mindestens ein organisches Anion einer alpha-Aminosäure umfasst.

2. Verfahren nach Anspruch 1, **dadurch gekennzeichnet, dass** das Korrosionsschutzgrundierungsmittel mindestens ein Polyvinylbutyralharz und/oder Epoxidharz als organisches Polymer (A) enthält.

3. Verfahren nach Anspruch 2, **dadurch gekennzeichnet, dass** das Korrosionsschutzgrundierungsmittel mindestens ein Epoxidharz als organisches Polymer (A) und mindestens ein Polyamin als Vernetzungsmittel enthält.

4. Verfahren nach einem der Ansprüche 1 bis 3, **dadurch gekennzeichnet, dass** das Korrosionsschutzgrundierungsmittel ein Zweikomponentensystem ist.

5. Verfahren nach einem der Ansprüche 1 bis 4, **dadurch gekennzeichnet, dass** das mindestens eine synthetische, organische Anionen enthaltende schichtförmige Doppelhydroxid (B) die allgemeine Formel (I)

$$[M^{2+}_{(1-x)}M^{3+}_x(OH)_2][A^{y-}_{(x/y)}]\cdot nH_2O \qquad (I)$$

aufweist, wobei $M^{2+}$ für zweiwertige metallische Kationen, $M^{3+}$ für dreiwertige metallische Kationen und $A^{y-}$ für Anionen der mittleren Valenz y steht, wobei die Anionen zumindest anteilig mindestens ein organisches Anion einer alpha-Aminosäure umfassen, x einen Wert von 0,05 bis 0,5 und n einen Wert zwischen 0 und 10 einnimmt.

6. Verfahren nach Anspruch 5, **dadurch gekennzeichnet, dass** das
die zweiwertigen metallischen Kationen $M^{2+}$ ausgewählt werden aus der Gruppe bestehend aus $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$ und Mischungen

davon, ganz besonders bevorzugt $Zn^{2+}$ und/oder $Mg^{2+}$, insbesondere $Zn^{2+}$,
die dreiwertigen metallischen Kationen $M^{3+}$ ausgewählt werden aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ und Mischungen davon, bevorzugt $Al^{3+}$, $Bi^{3+}$ und/oder $Fe^{3+}$, insbesondere $Al^{3+}$,
x einen Wert von 0,05 bis 0,5, insbesondere 0,15 bis 0,4, ganz besonders bevorzugt von 0,25 bis 0,35 und
n einen Wert von 0 bis 10 einnimmt.

7. Verfahren nach einem der Ansprüche 1 bis 6, **dadurch gekennzeichnet, dass** das mindestens eine organische Anion einer alpha-Aminosäure ausgewählt wird aus der Gruppe bestehend aus organischen Anionen von Alanin, Arginin, Asparagin, Asparaginsäure, Cystein, Cystin Glutamin, Glutaminsäure, Histidin, Isoleucin Leucin, Lysin, Methionin, Phenylalanin, Prolin, Serin, Threonin, Tryptophan, Tyrosin, Valin, Selenocystein, Pyrrolysin und Selenomethionin.

8. Verfahren nach einem der Ansprüche 1 bis 6, **dadurch gekennzeichnet, dass** das mindestens eine organische Anion einer alpha-Aminosäure ausgewählt wird aus der Gruppe bestehend aus organischen Anionen von alpha-Aminosäuren, die neben der einen Aminogruppe und der hierzu in alpha-Stellung angeordneten Carbonsäuregruppe noch weitere Aminogruppen, weitere Carbonsäuregruppen, Hydroxylgruppen, Thiolgruppen, Disulfidgruppen und/oder ungesättigte zyklische Reste enthalten.

9. Verfahren nach einem der Ansprüche 1 bis 6, **dadurch gekennzeichnet, dass** das mindestens eine organische Anion einer alpha-Aminosäure ausgewählt wird aus der Gruppe bestehend aus organischen Anionen von Arginin, Asparagin, Asparaginsäure, Cystein, Cystin, Glutamin, Glutaminsäure, Histidin, Lysin, Methionin, Phenylalanin, Prolin, Serin, Threonin, Tryptophan, und Tyrosin.

10. Verfahren nach Anspruch 9, **dadurch gekennzeichnet, dass** das mindestens eine organische Anion einer alpha-Aminosäure ausgewählt wird aus der Gruppe bestehend aus Cystein, Cystin, Phenylalanin.

11. Verfahren nach einem der Ansprüche 1 bis 10, **dadurch gekennzeichnet, dass** das mindestens eine synthetische, organische Anionen enthaltende schichtförmige Doppelhydroxid (B) durch direkte Kopräzipitation oder anionische Austauschreaktion hergestellt wird.

12. Verfahren nach einem der Ansprüche 1 bis 11, **dadurch gekennzeichnet, dass** der Anteil des mindestens einen synthetische, organische Anionen enthaltenden schichtförmigen Doppelhydroxids (B) 2 bis 15 Gew.-%, bezogen auf die Gesamtmenge des Korrosionsschutzgrundierungsmittels, beträgt.

13. Verfahren nach einem der Ansprüche 1 bis 12, **dadurch gekennzeichnet, dass** nach der Bildung des Polymerfilms (2)

    (3) mindestens ein weiteres Beschichtungsmittel aufgebracht wird, und
    (4) aus dem in Stufe (3) aufgebrachten weiteren Beschichtungsmittel ein Polymerfilm gebildet wird,

    wodurch eine Mehrschichtbeschichtung hergestellt wird.

14. Verfahren nach einem der Ansprüche 1 bis 13, **dadurch gekennzeichnet, dass** das metallische Substrat ausgewählt wird aus der Gruppe bestehend aus Aluminium, Aluminiumlegierungen, insbesondere Aluminiumkupferlegierungen, unlegiertem und legiertem Stahl.

15. Beschichtetes metallisches Substrat, welches nach dem Verfahren gemäß einem der Ansprüche 1 bis 14 beschichtet wurde.

16. Verwendung eines Korrosionsschutzgrundierungsmittels enthaltend

    (A) mindestens ein organisches Polymer, wobei es sich um ein Polyadditions-, Polykondensations- und/oder Polymerisationsharz handelt, als Bindemittel und
    (B) mindestens ein synthetisches, organische Anionen enthaltendes schichtförmiges Doppelhydroxid,

    wobei das mindestens eine synthetische schichtförmige Doppelhydroxid (B) mindestens ein organisches Anion einer alpha-Aminosäure enthält, zur Verbesserung der Korrosionsbeständigkeit metallischer Substrate.

**Claims**

1. Method for producing an anticorrosion coating, wherein

(1) an anticorrosion primer comprising

(A) at least one organic polymer as binder, this polymer being a polyaddition resin, polycondensation resin and/or addition polymerization resin, and
(B) at least one synthetic layered double hydroxide comprising organic anions is applied directly to a metallic substrate and

(2) a polymer film is formed from the anticorrosion primer applied in stage (1),

the method being **characterized in that**
the at least one synthetic layered double hydroxide (B) comprises at least one organic anion of an alpha-amino acid.

2. Method according to Claim 1, **characterized in that** the anticorrosion primer comprises at least one polyvinylbutyral resin and/or epoxy resin as organic polymer (A).

3. Method according to Claim 2, **characterized in that** the anticorrosion primer comprises at least one epoxy resin as organic polymer (A) and at least one polyamine as crosslinking agent.

4. Method according to any of Claims 1 to 3, **characterized in that** the anticorrosion primer is a two-component system.

5. Method according to any of Claims 1 to 4, **characterized in that** the at least one synthetic layered double hydroxide (B) comprising organic anions has the general formula (I)

$$[M^{2+}_{(1-x)}M^{3+}_{x}(OH)_2][A^{y-}_{(x/y)}] \cdot nH_2O \qquad (I)$$

where $M^{2+}$ stands for divalent metallic cations, $M^{3+}$ stands for trivalent metallic cations and $A^{y-}$ stands for anions of average valence y, the anions at least proportionally comprising at least one organic anion of an alpha-amino acid, x adopts a value of 0.05 to 0.5 and n adopts a value between 0 and 10.

6. Method according to Claim 5, **characterized in that** the divalent metallic cations $M^{2+}$ are selected from the group consisting of $2n^{2+}$, $Mg^{2+}$, $Ca^{2+}$, $C_u{}^{2+}$, $Ni^{2+}$, $Co^{2+}$, $Fe^{2+}$, $Mn^{2+}$, $Cd^{2+}$, $Pb^{2+}$, $Sr^{2+}$ and mixtures thereof, preferably $2n^{2+}$, $Mg^{2+}$, $Ca^{2+}$ and mixtures thereof, very preferably $Zn^{2+}$ and/or $Mg^{2+}$, more particularly $2n^{2+}$,
the trivalent metallic cations $M^{3+}$ are selected from the group consisting of $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ and mixtures thereof, preferably $Al^{3+}$, $Bi^{3+}$ and/or $Fe^{3+}$, more particularly $Al^{3+}$,
x adopts a value of 0.05 to 0.5, more particularly 0.15 to 0.4, very preferably of 0.25 to 0.35, and
n adopts a value of 0 to 10.

7. Method according to any of Claims 1 to 6, **characterized in that** the at least one organic anion of an alpha-amino acid is selected from the group consisting of organic anions of alanine, arginine, asparagine, aspartic acid, cysteine, cystine, glutamine, glutamic acid, histidine, isoleucine, leucine, lysine, methionine, phenylalanine, proline, serine, threonine, tryptophan, tyrosine, valine, selenocysteine, pyrrolysine and selenomethionine.

8. Method according to any of Claims 1 to 6, **characterized in that** the at least one organic anion of an alpha-amino acid is selected from the group consisting of organic anions of alpha-amino acids which in addition to the one amino group and to the carboxylic acid group arranged in alpha-position relative to it, additionally comprise further amino groups, further carboxylic acid groups, hydroxyl groups, thiol groups, disulfide groups and/or unsaturated cyclic radicals.

9. Method according to any of Claims 1 to 6, **characterized in that** the at least one organic anion of an alpha-amino acid is selected from the group consisting of organic anions of arginine, asparagine, aspartic acid, cysteine, cystine, glutamine, glutamic acid, histidine, lysine, methionine, phenylalanine, proline, serine, threonine, tryptophan and tyrosine.

10. Method according to Claim 9, **characterized in that** the at least one organic anion of an alpha-amino acid is selected from the group consisting of cysteine, cystine and phenylalanine.

11. Method according to any of Claims 1 to 10, **characterized in that** the at least one synthetic layered double hydroxide (B) comprising organic anions is prepared by direct coprecipitation or anionic exchange reaction.

12. Method according to any of Claims 1 to 11, **characterized in that** the fraction of the at least one synthetic layered double hydroxide (B) comprising organic anions is 2% to 15% by weight, based on the total amount of the anticorrosion primer.

13. Method according to any of Claims 1 to 12, **characterized in that** after the formation of the polymer film (2)

> (3) at least one further coating material is applied, and
> (4) a polymer film is formed from the further coating material applied in stage (3),

to produce a multicoat coating.

14. Method according to any of Claims 1 to 13, **characterized in that** the metallic substrate is selected from the group consisting of aluminum, aluminum alloys, more particularly aluminum-copper alloys, and unalloyed and alloyed steel.

15. Coated metallic substrate coated by the method according to any of Claims 1 to 14.

16. Use of an anticorrosion primer comprising

> (A) at least one organic polymer as binder, this polymer being a polyaddition resin, polycondensation resin and/or addition polymerization resin, and
> (B) at least one synthetic layered double hydroxide comprising organic anions,

the at least one synthetic layered double hydroxide (B) containing at least one organic anion of an alpha-amino acid, for improving the corrosion resistance of metallic substrates.

## Revendications

1. Procédé de fabrication d'un revêtement anticorrosion, selon lequel

> (1) un agent primaire anticorrosion contenant :

> > (A) au moins un polymère organique, qui consiste en une résine de polyaddition, de polycondensation et/ou de polymérisation, en tant que liant, et
> > (B) au moins un hydroxyde double stratifié synthétique contenant des anions organiques,

> est appliqué directement sur un substrat métallique et
> (2) un film polymère est formé à partir de l'agent primaire anticorrosion appliqué à l'étape (1),

le procédé étant **caractérisé en ce que**
ledit au moins un hydroxyde double stratifié synthétique (B) comprend au moins un anion organique d'un acide aminé alpha.

2. Procédé selon la revendication 1, **caractérisé en ce que** l'agent primaire anticorrosion contient au moins une résine de polyvinylbutyral et/ou une résine époxyde en tant que polymère organique (A).

3. Procédé selon la revendication 2, **caractérisé en ce que** l'agent primaire anticorrosion contient au moins une résine époxyde en tant que polymère organique (A) et au moins une polyamine en tant qu'agent de réticulation.

4. Procédé selon l'une quelconque des revendications 1 à 3, **caractérisé en ce que** l'agent primaire anticorrosion est un système bicomposant.

5. Procédé selon l'une quelconque des revendications 1 à 4, **caractérisé en ce que** ledit au moins un hydroxyde double stratifié synthétique contenant des anions organiques (B) présente la formule générale (I)

$$[M^{2+}_{(1-x)}M^{3+}_{x}(OH)_2][A^{y-}_{(x/y)}]\cdot nH_2O \qquad (I)$$

dans laquelle $M^{2+}$ représente des cations métalliques bivalents, $M^{3+}$ représente des cations métalliques trivalents et $A^{y-}$ représente des anions d'une valence moyenne y, les anions comprenant au moins en partie au moins un anion organique d'un acide aminé alpha, x prenant une valeur de 0,05 à 0,5 et n une valeur comprise entre 0 et 10.

6. Procédé selon la revendication 5, **caractérisé en ce que** les cations métalliques bivalents $M^{2+}$ sont choisis dans le groupe constitué par $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ et leurs mélanges, de préférence $2n^{2+}$, $Mg^{2+}$, $Ca^{2+}$ et leurs mélanges, de manière tout particulièrement préférée $Zn^{2+}$ et/ou $Mg^{2+}$, notamment $Zn^{2+}$,
les cations métalliques trivalents $M^{3+}$ sont choisis dans le groupe constitué par $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ et leurs mélanges, de préférence $Al^{3+}$, $Bi^{3+}$ et/ou $Fe^{3+}$, notamment $Al^{3+}$,
x prend une valeur de 0,05 à 0,5, notamment de 0,15 à 0,4, de manière tout particulièrement préférée de 0,25 à 0,35, et n prend une valeur de 0 à 10.

7. Procédé selon l'une quelconque des revendications 1 à 6, **caractérisé en ce que** ledit au moins un anion organique d'un acide aminé alpha est choisi dans le groupe constitué par les anions organiques d'alanine, d'arginine, d'asparagine, d'acide asparagique, de cystéine, de cystine, de glutamine, d'acide glutamique, d'histidine, d'isoleucine, de leucine, de lysine, de méthionine, de phénylalanine, de proline, de sérine, de thréonine, de tryptophane, de tyrosine, de valine, de sélénocystéine, de pyrrolysine et de sélénométhionine.

8. Procédé selon l'une quelconque des revendications 1 à 6, **caractérisé en ce que** ledit au moins un anion organique d'un acide aminé alpha est choisi dans le groupe constitué par les anions organiques d'acides aminés alpha qui contiennent en plus du groupe amino et du groupe acide carboxylique agencé en position alpha par rapport à celui-ci également d'autres groupes amino, d'autres groupes acide carboxylique, des groupes hydroxyle, des groupes thiol, des groupes disulfure et/ou des radicaux cycliques insaturés.

9. Procédé selon l'une quelconque des revendications 1 à 6, **caractérisé en ce que** ledit au moins un anion organique d'un acide aminé alpha est choisi dans le groupe constitué par les anions organiques d'arginine, d'asparagine, d'acide asparagique, de cystéine, de cystine, de glutamine, d'acide glutamique, d'histidine, de lysine, de méthionine, de phénylalanine, de proline, de sérine, de thréonine, de tryptophane et de tyrosine.

10. Procédé selon la revendication 9, **caractérisé en ce que** ledit au moins un anion organique d'un acide aminé alpha est choisi dans le groupe constitué par la cystéine, la cystine, la phénylalanine.

11. Procédé selon l'une quelconque des revendications 1 à 10, **caractérisé en ce que** ledit au moins un hydroxyde double stratifié synthétique contenant des anions organiques (B) est fabriqué par co-précipitation directe ou réaction d'échange anionique.

12. Procédé selon l'une quelconque des revendications 1 à 11, **caractérisé en ce que** la proportion dudit au moins hydroxyde double stratifié synthétique contenant des anions organiques (B) est de 2 à 15 % en poids, par rapport à la quantité totale de l'agent primaire anticorrosion.

13. Procédé selon l'une quelconque des revendications 1 à 12, **caractérisé en ce qu'**après la formation du film polymère (2),

    (3) au moins un agent de revêtement supplémentaire est appliqué, et
    (4) un film polymère est formé à partir de l'agent de revêtement supplémentaire appliqué à l'étape (3),

    un revêtement multicouche étant ainsi fabriqué.

14. Procédé selon l'une quelconque des revendications 1 à 13, **caractérisé en ce que** le substrat métallique est choisi dans le groupe constitué par l'aluminium, les alliages d'aluminium, notamment les alliages d'aluminium et de cuivre, l'acier non allié et allié.

15. Substrat métallique revêtu, qui a été revêtu par le procédé selon l'une quelconque des revendications 1 à 14.

**16.** Utilisation d'un agent primaire anticorrosion contenant :

(A) au moins un polymère organique, qui consiste en une résine de polyaddition, de polycondensation et/ou de polymérisation, en tant que liant, et
(B) au moins un hydroxyde double stratifié synthétique contenant des anions organiques,

ledit au moins un hydroxyde double stratifié synthétique (B) contenant au moins un anion organique d'un acide aminé alpha,
pour améliorer la résistance à la corrosion de substrats métalliques.

**Abbildung 1**:

**Abbildung 2:**

Abbildung 3:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03102085 A
- EP 0282619 A1
- WO 2005003408 A2
- EP 2604661 A1
- WO 2013083293 A1
- CN 102634835 A
- CN 102432778 A
- DE 19930665 A1

**In der Beschreibung aufgeführte Nicht-Patentliteratur**

- *ECS Transactions,* 2010, vol. 24 (1), 67-76
- *Publikationen Applied Clay Science,* 2012, vol. 55, 88-93
- *Journal of Solid State Chemistry,* 2012, vol. 185, 150-155
- *Journal of Material Science,* 2008, vol. 42 (2), 434-439
- Preparation of Layered Double Hydroxides. **E. KANEZAKI.** Interface Science and Technology. Elsevier, 2004, vol. 1, 345
- Preparation of Layered Double Hydroxides. **D.G. EVANS.** Struct Bond. Springer, 2005, vol. 119, 89-119
- *Progress in Organic Coatings,* 2008, vol. 61, 283-290